# EUROPEAN PATENT APPLICATION

(11) **EP 2 508 958 A1**
(43) Date of publication of application: **10.10.2012**
(21) Application number: 09851872.3
(22) Date of filing: 03.12.2009
(51) Int. Cl.: G05G 5/03, B60T 7/06, G05G 1/30

(54) **PIVOT-ARM TYPE MANIPULATOR DEVICE**

(71) Applicant: Toyota Jidosha Kabushiki Kaisha, Toyota-shi, Aichi 471-8571 (JP)
(72) Inventor: ISONO Hiroshi, Toyota-shi Aichi 471-8571 (JP)
(74) Representative: Intès, Didier Gérard André
(86) International application number: PCT/JP2009/070633
(87) International publication number: WO 2011/067864

(57) **Abstract**

Disclosed is a pivot-arm type manipulator device, comprising an arm member that pivots about an axis by being manipulated, and a friction contact unit that generates friction force as the arm member pivots. At least one of the following differs between a first region of a small degree of manipulation vis-à-vis the arm member and a second region of the degree of manipulation vis-à-vis the arm member that is greater than the degree of manipulation of the first region: the friction coefficient between two members that configure the friction contact unit, the pressing load that acts between the two members that configure the friction contact unit, or the distance in the radial direction between the axis and the friction contact unit. The resistance torque that is applied to the arm member about the axis by friction force accordingly varies with the degree of manipulation vis-à-vis the arm member.

## Description

### TECHNICAL FIELD

The present invention relates to a pivot-arm type manipulator device such as a brake pedal device and, more particularly, to a pivot-arm type manipulator device which varies moving easiness of a pivot arm in accordance with a degree of manipulation.

### BACKGROUND ART

As a brake pedal device for a vehicle such as an automobile, a brake pedal device has been well known, which affords a braking efficiency feeling in accordance with pedal effort. For example, in Japanese Patent Laid-Open Publication No. 2005-262210, a brake pedal device is described which has a plurality of return springs having different spring rates from each other on an operation rod so as to generate a reaction force in accordance with pedal effort applied to a brake pedal, thereby to afford a braking efficiency feeling in accordance with pedal effort. According to this type of brake pedal device, a rate of increasing amount of the reaction force generated by a return spring to increasing amount of pedal effort can be increased in accordance with pedal effort applied to a brake pedal, which enables to enhance a braking efficiency feeling in accordance with pedal effort.

In general, a pivot-arm type manipulator device such as a brake pedal device preferably has properties that a ratio of the increasing amount of reaction force to the increasing amount of pedal effort increases in accordance with the increase in pedal effort, and, in addition, a pivot arm is easy to move under the situation where manipulation degree is in a lower region such as at the time of starting manipulation and is hard to move under the situation where manipulation degree is in a higher region and is maintained.

On the other hand, a pivot-arm type manipulator device such as a clutch pedal device preferably has properties that a ratio of the increasing amount of reaction force to the increasing amount of pedal effort increases in accordance with the increase in pedal effort under the situation where manipulation degree is in a much higher region, and, in addition, a pivot arm is hard to move under the situation where manipulation degree is in a lower region such as at the time of starting manipulation and is easy to move under the situation where manipulation degree is in a higher region.

However, in such a conventional pivot-arm type manipulator device as described in the above-mentioned Japanese Patent Laid-Open Publication, although a ratio of the increasing amount of reaction force to the increasing amount of pedal effort can be increased in accordance with the increase in the degree of manipulation vis-à-vis a pivot arm, but the easiness and hardness in moving a pivot arm cannot be desirably varied in accordance with manipulation degree. As a result, stability in manipulation is hard to ensure in a region where manipulation degree is higher while ensuring easiness in moving a pivot arm in a region where manipulation degree is lower, and conversely, easiness in manipulation is hard to ensure in a region where manipulation degree is higher while suppressing unnecessary moving of a pivot arm in a region where manipulation degree is lower.

### DISCLOSURE OF THE INVENTION

A primary object of the present invention is, in a pivot-arm type manipulator device such as a brake pedal device and a clutch pedal device, to desirably vary the easiness and hardness in moving a pivot arm in accordance with the degree of manipulation vis-à-vis the pivot arm, to thereby optimize the easiness and stability in manipulating the pivot arm in accordance with manipulation degree.

The present invention provides a pivot-arm type manipulator device having an arm member that pivots about an axis by being manipulated, wherein the manipulator device having a friction contact unit that generates friction force as the arm member pivots; and the resistance torque that is applied to the arm member about the axis by the friction force assumes different values in a first region of a small degree of manipulation vis-à-vis the arm member and in a second region of the degree of manipulation vis-à-vis the arm member that is greater than the degree of manipulation of the first region.

According to the above-described configuration, the resistance torque that is applied to the arm member about the axis by the friction force assumes different values in a first and a second regions where degree of manipulation vis-à-vis the arm member is different from each other. Accordingly, the easiness and hardness in moving a pivot arm can desirably be varied in accordance with manipulation degree, which enables to optimize the easiness and stability in manipulating the pivot arm in accordance with manipulation degree.

A resistance force can desirably be varied in accordance with manipulation degree independently of the returning force applied to the arm member by a return spring. Accordingly, the easiness and stability in manipulating the pivot arm can be optimized in accordance with manipulation degree while ensuring good manipulation feelings such as braking efficiency feeling and the like by the returning force of a return spring.

The above-mentioned configuration may be such that the resistance torque in the first region is smaller than that in the second region; and the ratio of the variation of the resistance torque relative to the variation of the degree of manipulation vis-à-vis the arm member is larger in the second region than in the first region.

According to this configuration, it is possible to enlarge the hysteresis width of the variation in the output of the arm member when the manipulation degree is increased and is subsequently decreased while reducing the resistance torque in a region where the manipulation degree is in a smaller region. Accordingly, it is possible to reduce the variation in the output of the arm member when the manipulation degree is varied between increasing mode and decreasing mode in a region where the manipulation degree is larger while ensuring good easiness in moving the arm member at the time of starting manipulation.

The above-mentioned configuration may be such that the resistance torque in the first region is larger than that in the second region; and the ratio of the variation of the resistance torque relative to the variation of the degree of manipulation vis-à-vis the arm member is larger in the second region than in the first region.

According to this configuration, it is possible to reduce the hysteresis width of the variation in the output of the arm member when the manipulation degree is increased and is subsequently decreased while enlarging the resistance torque in a region where the manipulation degree is in a smaller region. Accordingly, it is possible to ensure a good returning of the arm member in a region where the manipulation degree is larger while reducing the easiness in moving the arm member to suppress the unintentional displacement of the arm member under the situation where the manipulation degree is smaller such as at the time of starting manipulation.

The above-mentioned configuration may be such that at least one of the following differs between the first and second regions: the friction coefficient between two members that configure the friction contact unit, the pressing load that acts between the two members that configure the friction contact unit, or the distance in the radial direction between the axis and the friction contact unit.

The resistance torque applied to the arm member about the axis by the friction force is a product of the friction force and the radial distance between the axis and the friction contact unit. According to this configuration, at least one of the friction force and the radial distance can be made different between the first and second regions, which enables reliably to make the resistance torque different between the first and second regions.

The above-mentioned configuration may be such that the friction contact unit includes at least two friction contact units including a first and a second friction contact unit; and the distance in the radial direction between the axis and the second friction contact unit is larger than the distance in the radial direction between the axis and the first friction contact unit.

According to this configuration, the resistance torque generated by the friction force in the second friction contact unit can easily and reliably be made larger than the resistance torque generated by the friction force in the first friction contact unit.

The above-mentioned configuration may be such that the two members that configure the second friction contact unit are spaced apart from each other when the degree of manipulation vis-à-vis the arm member is in the first region and are in contact with each other when the degree of manipulation vis-à-vis the arm member is in the second region.

According to this configuration, the second friction contact unit does not generate a friction force when the manipulation degree is in the first region whereas it generates a friction force when the manipulation degree is in the second region. Accordingly, the resistance torque is generated by the friction forces generated in the first and second friction contact units when the manipulation degree is in the second region, which easily and reliably enables to make the resistance torque generated in the second friction contact unit larger than the resistance torque generated in the fist friction contact unit.

The above-mentioned configuration may be such that the two members that configure the second friction contact unit are in contact with each other; and the increasing rate of the pressing load acting between the two members associated with the increase in the degree of manipulation vis-à-vis the arm member when the degree of manipulation vis-à-vis the arm member is in the second region is larger than that when the degree of manipulation vis-à-vis the arm member is in the first region.

According to this configuration, the second friction contact unit generates a friction force when the manipulation degree is in both the first and second regions, and the increasing rate in the friction force in accordance with the increase in the manipulation degree is higher when the manipulation degree is in the second region than when the manipulation degree is in the first region. Accordingly, the resistance torque and the increasing rate thereof in the second region can easily and reliably be made larger than those in the first region.

The above-mentioned configuration may be such that the pivot-arm type manipulator device has a manipulation force transmitting unit which transmits a part of the manipulation force received by the arm member as a radial load to the second friction contact unit; and the two members that configure the second friction contact unit are pressed against each other by the radial load.

According to this configuration, the pressing load exerted between the two members that configure the second friction contact unit can be increased in accordance with the increase in the manipulation force received by the arm member, which easily and reliably enables to increase the friction force and the resistance torque thereby in the second friction contact unit in accordance with the increase in the manipulation force.

The above-mentioned configuration may be such that a main load acting between the two members that configure the first friction contact unit is a thrust load acting along the axis; and a main load acting between the two members that configure the second friction contact unit is a radial load.

According to this configuration, the pressing load exerted between the two members that configure the second friction contact unit can be increased in accordance with the increase in the manipulation force while depressing the increase of the pressing load exerted between the two members that configure the first friction contact unit. Accordingly, the increasing rate of the friction force and the resistance torque generated thereby in the second friction contact unit can be increased under the situation where the manipulation force is increased while depressing the increasing rate of the friction force and the resistance torque generated thereby in the first friction contact unit to lower values.

The above-mentioned configuration may be such that the pivot-arm type manipulator device has manipulation force transmitting units which transmit a part of the manipulation force received by the arm member as radial loads to the first and second friction contact units; and with the rate of the radial load transmitted to the second friction contact unit relative to the radial load transmitted to the first friction contact unit being referred to a sharing rate of the radial load, the sharing rate of the radial load when the degree of manipulation vis-à-vis the arm member is in the second region is larger than that when the degree of manipulation vis-à-vis the arm member is in the first region.

According to this configuration, the rate of the radial load transmitted to the second friction contact unit relative to the radial load transmitted to the first friction contact unit can be made larger when the manipulation degree is in the second region than when the manipulation degree is in the first region. Accordingly, the rate of the pressing load exerted between the two members in the second friction contact unit relative to the pressing load exerted between the two members in the first friction contact unit can be made larger when the manipulation degree is in the second region than when the manipulation degree is in the first region. Therefore, the friction force and the resistance torque generated thereby in the second friction contact unit can easily and reliably be made larger when the manipulation degree is in the second region than when the manipulation degree is in the first region.

The rate of the increasing rate of the radial load transmitted to the second friction contact unit relative to the increasing rate of the radial load transmitted to the first friction contact unit can be made larger when the manipulation degree is in the second region than that when the manipulation degree is in the first region. Accordingly, the rate of the increasing rate of the pressing load exerted between the two members in the second friction contact unit relative to the increasing rate of the pressing load exerted between the two members in the first friction contact unit can be made larger when the manipulation degree is in the second region than when the manipulation degree is in the first region. Therefore, the increasing rates of the friction force and the resistance torque generated thereby in the second friction contact unit can easily and reliably be made larger when the manipulation degree is in the second region than those when the manipulation degree is in the first region.

The above-mentioned configuration may be such that a main load acting between the two members that configure the first friction contact unit and a main load acting between the two members that configure the second friction contact unit are radial loads.

According to this configuration, no thrust load is exerted between the two members in the first friction contact unit and a radial load exerted between the two members in the first friction contact unit may be very low when the arm member receives no manipulation force. Accordingly, the friction force generated in the first friction contact unit at the time of starting manipulation can be made smaller as compared with the configuration in which thrust load is exerted between the two members in the first friction contact unit. In addition, by reducing the radial distance between the axis and the first friction contact unit, the resistance torque generated by the friction force can be reduced, which enhances the easiness in moving the arm member at the time of starting manipulation.

The above-mentioned configuration may be such that the friction contact unit is configured by an eccentric cam which pivots about the axis as the arm member pivots and a friction member which frictionally engages with the cam surface of the eccentric cam while being pressed against the cam surface; and the distance between the axis and the cam surface in the friction contact unit is larger when the degree of manipulation vis-à-vis the arm member is in the second region than that when the degree of manipulation vis-à-vis the arm member is in the first region.

According to this configuration, the distance between the axis and the cam surface in the friction contact unit can be made larger when the degree of manipulation vis-à-vis the arm member is in the second region than when the degree of manipulation vis-à-vis the arm member is in the first region. Accordingly, the friction force and the resistance torque generated thereby in the second friction contact unit can easily and reliably be made larger when the manipulation degree is in the second region than those when the manipulation degree is in the first region.

The above-mentioned configuration may be such that the friction member is pressed against the cam surface of the eccentric cam by elastic urging force of an elastic urging member.

According to this configuration, as the distance between the axis and the friction contact unit increases, the elastic deformation amount of the elastic urging member increases, resulting in the increase in the elastic urging force. The pressing load which presses the friction member against the cam surface of the eccentric cam can be made larger when the manipulation degree is in the second region than that when the manipulation degree is in the first region. Accordingly, by this reason as well, the friction force and the resistance torque generated thereby in the second friction contact unit can easily and reliably be made larger when the manipulation degree is in the second region than those when the manipulation degree is in the first region.

The above-mentioned configuration may be such that the pivot-arm type manipulator device is a brake pedal device for adjusting braking force.

According to this configuration, it is possible to reduce the variation amount in braking force when the braking manipulation degree is varied between increasing mode and decreasing mode under the situation where the braking manipulation degree is in a larger region, to thereby ensure the stability of braking manipulation while ensuring the easiness in moving the arm member at the time of staring manipulation when the brake pedal device is manipulated.

The above-mentioned configuration may be such that the friction contact unit is configured by an eccentric cam which pivots about the axis as the arm member pivots and a friction member which frictionally engages with the cam surface of the eccentric cam while being pressed against the cam surface; and the distance between the axis and the cam surface in the friction contact unit is larger when the degree of manipulation vis-à-vis the arm member is in the first region than when the degree of manipulation vis-à-vis the arm member is in the second region.

According to this configuration, the distance between the axis and the cam surface in the friction contact unit can be made larger when the degree of manipulation vis-à-vis the arm member is in the first region than when the degree of manipulation vis-à-vis the arm member is in the second region. Accordingly, the friction force and the resistance torque generated thereby in the second friction contact unit can easily and reliably be made larger when the manipulation degree is in the first region than those when the manipulation degree is in the second region.

The above-mentioned configuration may be such that the friction member is pressed against the cam surface of the eccentric cam by elastic urging force of an elastic urging member.

According to this configuration, as the distance between the axis and the friction contact unit increases, the elastic deformation amount of the elastic urging member increases, resulting in the increase in the elastic urging force. The pressing load which presses the friction member against the cam surface of the eccentric cam can be made larger when the manipulation degree is in the first region than that when the manipulation degree is in the second region. Accordingly, by this reason as well, the friction force and the resistance torque generated thereby in the second friction contact unit can easily and reliably be made larger when the manipulation degree is in the first region than those when the manipulation degree is in the second region.

The above-mentioned configuration may be such that the pivot-arm type manipulator device is a clutch pedal device for operating a clutch.

According to this configuration, it is possible to ensure a good returning of the arm member in a region where the depressing manipulation degree is larger while reducing the easiness in moving the arm member to suppress the displacement of the arm member under the situation where the depressing manipulation degree is smaller when the clutch pedal device is manipulated.

The above-mentioned configuration may be such that the pivot-arm type manipulator device has a displacement suppressing unit which suppresses the displacement of the arm member in the direction along the axis.

According to this configuration, it is possible to effectively suppress the wobbling of the arm member along the axes and the fluctuations in the friction forces and the resistance torque generated by the friction forces due to the wobbling.

The present invention provides a pivot-arm type manipulator device having an arm member that is urged toward its initial position by return urging force and pivots about an axis by being manipulated, comprising: a friction contact unit that generates friction force as the arm member pivots; and a resistance torque varying mechanism which varies the resistance torque that is applied to the arm member about the axis by the friction force in accordance with the degree of manipulation vis-à-vis the arm member independently of the reaction torque which is applied to the arm member about the axis by the return urging force.

According to this configuration, the resistance torque generated by the friction force can be varied in accordance with the degree of manipulation vis-à-vis the arm member independently of the reaction torque generated by the return urging force. Accordingly, the easiness and hardness in moving a pivot arm can desirably be varied in accordance with manipulation degree, which enables to optimize the easiness and stability in manipulating the pivot arm in accordance with manipulation degree.

The resistance torque generated by the friction force can desirably be varied in accordance with manipulation degree without affecting the reaction torque generated by the return urging force. Accordingly, the easiness and stability in manipulating the pivot arm can be optimized in accordance with manipulation degree while ensuring good manipulation feelings such as braking efficiency feeling and the like by the returning force.

The above-mentioned configuration may be such that the resistance torque varying mechanism varies at least one of the friction coefficient between two members that configure the friction contact unit, the pressing load that acts between the two members that configure the friction contact unit, or the distance in the radial direction between the axis and the friction contact unit in accordance with the degree of manipulation vis-à-vis the arm member.

According to this configuration, at least one of the friction force and the radial distance can be varied in accordance with the degree of manipulation vis-à-vis the arm member, which enables reliably to vary the resistance torque generated by the friction force in accordance with the manipulation degree.

### BRIEF DESCRIPTION OF THE DRAWINGS

FIG. 1 is a schematic diagram showing a first embodiment of a pivot-arm type manipulator device according to the present invention which is applied to a brake pedal device.
FIG. 2 is an enlarged sectional view showing the first and second bearings in the first embodiment.
FIG. 3 is a graph showing the forces exerting in the brake pedal device when a pedal effort is applied to a pedal portion.
FIG. 4 is a graph showing the relationship between a drive torque Tp applied to an arm member and a resistance torque Tdrag exerted against the arm member with respect to the first embodiment.
FIG. 5 is a graph showing the relationship between a pedal effort Fin and an axial force Fop of an operation rod with respect to the first embodiment.
FIG. 6 is an enlarged sectional view showing the first and second bearings in a second embodiment of the pivot-arm type manipulator device according to the present invention which is applied to a brake pedal device.
FIG. 7 is an enlarged sectional view showing the first and second bearings in a third embodiment of the pivot-arm type manipulator device according to the present invention which is applied to a brake pedal device.
FIG. 8 is an enlarged sectional view showing the first and second bearings in a fourth embodiment of the pivot-arm type manipulator device according to the present invention which is applied to a brake pedal device.
FIG. 9 is an enlarged sectional view showing the first and second bearings in a fifth embodiment of the pivot-arm type manipulator device according to the present invention which is applied to a brake pedal device.
FIG. 10 is a graph showing the relationship between a drive torque Tp applied to an arm member and a resistance torque Tdrag exerted against the arm member with respect to the fifth embodiment.
FIG. 11 is a graph showing the relationship between a pedal effort Fin and an axial force Fop of an operation rod with respect to the fifth embodiment.
FIG. 12 is an enlarged sectional view showing the first and second bearings in a sixth embodiment of the pivot-arm type manipulator device according to the present invention which is applied to a brake pedal device.
FIG. 13 is an enlarged sectional view showing the first and second bearings in a seventh embodiment of the pivot-arm type manipulator device according to the present invention which is applied to a brake pedal device.
FIG. 14 is an enlarged sectional view showing a clevis coupling in a eighth embodiment of the pivot-arm type manipulator device according to the present invention which is applied to a brake pedal device.
FIG. 15 is a schematic diagram showing a ninth embodiment of a pivot-arm type manipulator device according to the present invention which is applied to a brake pedal device.
FIG. 16 is a graph showing the relationship between a pedal effort Fin applied to a pedal portion and a resistance torque Tdrag exerted against the arm member with respect to the ninth embodiment.
FIG. 17 is a graph showing the relationship between a pedal effort Fin applied to the pedal portion and an axial force Fop of an operation rod with respect to the ninth embodiment.
FIG. 18 is a schematic diagram showing a tenth embodiment of a pivot-arm type manipulator device according to the present invention which is applied to a clutch pedal device.
FIG. 19 is a graph showing the relationship between a pedal effort Fin applied to a pedal portion and a resistance torque Tdrag exerted against the arm member with respect to the tenth embodiment.
FIG. 20 is a graph showing the relationship between a pedal effort Fin applied to the pedal portion and an axial force Fop of an operation rod with respect to the tenth embodiment.
FIG. 21 is a graph showing the relationship between a pedal effort Fin applied to the pedal portion and an axial force Fop of an operation rod for the case where the values of "a certain particular value" with respect to a pedal effort Fin are different from each other for the first and second bearing in the first embodiment.
FIG. 22 is an enlarged sectional view showing a spacer which is one of the members constituting a second friction contact unit with respect to a modification of the first embodiment.
FIG. 23 is a graph showing the relationship between a drive torque Tp applied to a pedal portion and a resistance torque Tdrag exerted against the arm member with respect to an modification in which two members constituting a second friction contact unit are in contact with each other even when a pedal effort Fin is not larger than a certain particular value Fins.
FIG. 24 is a graph showing the relationship between a pedal effort Fin applied to the pedal portion and an axial force Fop of an operation rod with respect to the modification in which two members constituting a second friction contact unit are in contact with each other even when a pedal effort Fin is not larger than a certain particular value Fins.
FIG. 25 is a graph showing the relationship between a pedal effort Fin applied to the pedal portion and an axial force Fop of an operation rod with respect to the modification in which the spring rate of a return spring varies in two stages in accordance with pivotal displacement of an arm member.

### BEST MODE FOR CARRYING OUT THE INVENTION

The present invention will now be described in detail with respect to preferred embodiments by referring to the accompanying drawings.

### First Embodiment

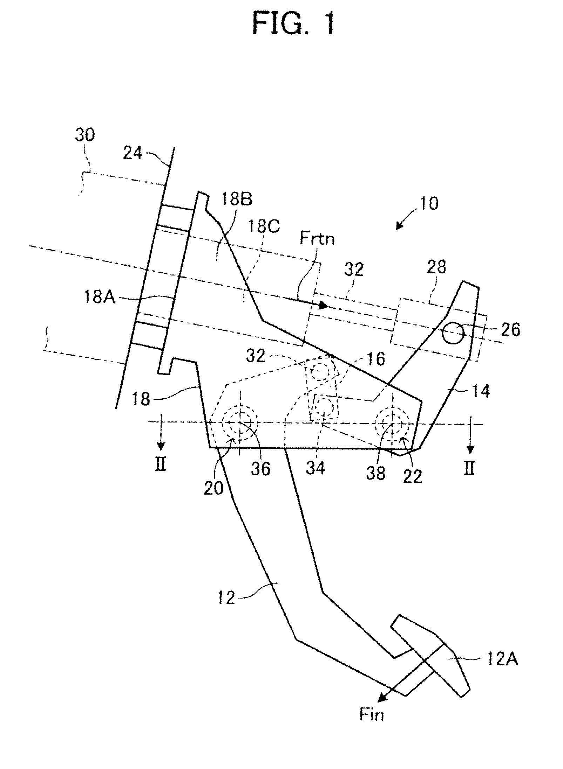

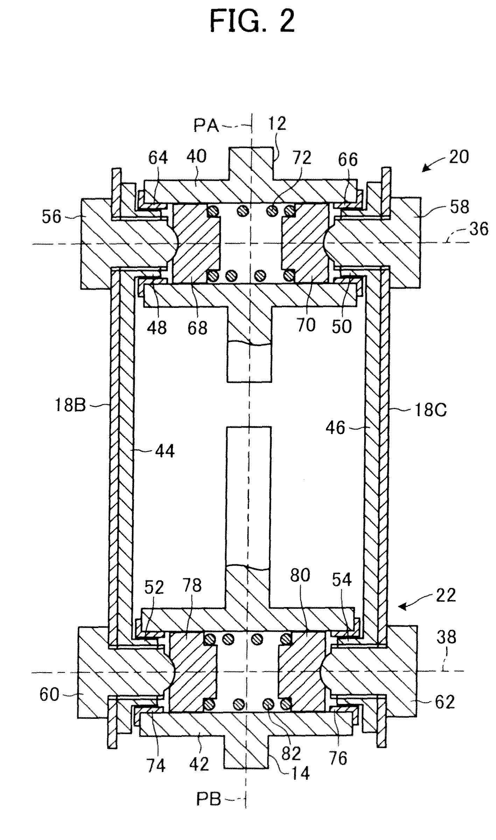

FIG. 1 is a schematic diagram showing a first embodiment of a pivot-arm type manipulator device according to the present invention which is applied to a brake pedal device, and FIG. 2 is an enlarged sectional view showing the first and second bearings in the first embodiment.

In FIG. 1, reference numeral 10 denotes an entire brake pedal device according to the first embodiment. The brake pedal device 10 is a link type pedal and has a first arm member 12 serving as a pedal arm, a second arm 14 serving as an auxiliary arm, an intermediate link 16 and a support bracket 18. The first arm member 12 is pivotally supported by a first bearing 20 and the second arm 14 is pivotally supported by a second bearing 22.

The support bracket 18 has a base section 18A which is fixed to a vehicle body 24 and a pair of support section 18B and 18C which are integral with the base section 18A and extend vertically with respect to the base section 18A in parallel to each other. The first arm member 12, the second arm member 14 and the intermediate arm 16 are positioned between the pair of support sections 18B and 18C, and the first bearing 20 and the second bearing 22 are supported by the pair of support sections 18B and 18C. It is to be noted that the support sections 18B and 18C are integrally connected as well at positions spaced from the base section 18A so that they maintain extending in parallel to each other.

The first arm member 12 has a pedal section 12A at its one end and receives a pedal effort Fin as a manipulation force at the pedal section 12A. One end of a clevis 28 is pivotally connected to one end of the second arm member 14 by a pivot shaft 26 and the other end of the clevis 28 is coupled to an operation rod 32 of a master cylinder device 30. The intermediate link 16 is comprised of a pair of link members positioned on opposite sides of the first arm member 12 and the second arm member 14. The pair of link members of the intermediate link 16 are pivotally connected at their one end to the other end of the first arm member 12 by a pivot shaft 32 and are pivotally connected at their other end to the other end of the second arm member 14 by a pivot shaft 34.

Accordingly, the pedal effort Fin received by the first arm member 12 at the pedal section 12A is transmitted to the second arm member 14 by way of the intermediate link 16 and is further transmitted to the operation rod 32 by way of the bearing 26 and the clevis 28. Thus, the first arm member 12 functions as an input arm member and the second arm member 14 functions as an output arm member.

It is to be understood that the first arm member 12, the intermediate link 16 and the second arm member 14 are forced by a return force Frtn of a return spring not shown involved in a booster in the master cylinder 30 toward their initial positions, i.e. their positions when a force Fin does not act on the pedal section 12A.

As illustrated in FIG.2, the first bearing 20 supports the first arm member 12 so that it can pivot about an axis 36 and the second bearing 22 supports the second arm member 14 so that it can pivot about an axis 38. The axis 36 extends vertically with respect to a center plane PA of the first arm member 12 and the axis 38 extends vertically with respect to a center plane PB of the second arm member 14. The center planes PA and PB are aligned with each other. The axes 36 and 38 are parallel to each other and extend vertically with respect to the support sections 18B and 18C of the support bracket 18.

The first bearing 20 has a cylindrical boss portion 40 formed integral with the first arm member 12 and the boss portion 40 extends vertically relative to the center plane PA of the first arm member 12. In similar, the second bearing 22 has a cylindrical boss portion 42 formed integral with the second arm member 14 and the boss portion 42 extends vertically relative to the center plane PB of the second arm member 14.

Bearing support plates 44 and 46 are provided on the inner side of the support section 18B and 18C, respectively so that they contact with the support section 18B and 18C. The bearing support plates 44 and 46 have cylindrical boss portions 48 and 50 for the first bearing, respectively and cylindrical boss portions 52 and 54 for the second bearing, respectively.

The boss portions 48 and 50 project from the bearing support plates 44 and 46, respectively in the direction toward to each other along the axis 36. The boss portions 48 and 50 have internal screws and are aligned with holes provided in the support sections 18B and 18C of the support bracket 18. Bolts 56 and 58 are screwed into the boss portions 48 and 50 through holes provided in the support section 18B and 18C, respectively.

In similar, the boss portions 52 and 54 project from the bearing support plates 44 and 46, respectively in the direction toward to each other along the axis 38. The boss portions 52 and 54 have internal screws and are aligned with holes provided in the support sections 18B and 18C of the support bracket 18. Bolts 60 and 62 are screwed into the boss portions 52 and 54 through holes provided in the support section 18B and 18C, respectively.

Thus, the bolts 56 and 58 extend along the axis 36 and serves as a shaft member of the first bearing 20. Similarly, the bolts 60 and 62 extend along the axis 38 and serves as a shaft member of the second bearing 22. These bolts integrally fix the support section 18B and 18C of the bracket 18 and the bearing support plates 44 and 46 by co-jointing.

The bolts 56, 58 and the boss portions 48, 50 are inserted in the associated ends of the boss portion 40. Spacers 64 and 66 are interposed between the boss portions 48, 50 and the boss portion 40, respectively. The spacers 64 and 66 have cylindrical portions which face the outer surfaces of the boss portions 48 and 50 at their inner surfaces and contact with the inner surfaces of the boss portion 40 at the outer surfaces, and flange portions which project from the cylindrical portions and extend circumferentially.

The inner diameter of the cylindrical portions of the spacers 64 and 66 is set to a value which is slightly larger than the outer diameter of the boss portions 48 and 50 such that a slight space is provided between the inner surfaces of the cylindrical portions of the spacers 64and 66 and the outer surfaces of the boss portions 48 and 50. The flange portions of the spacers 64 and 66 are positioned between the bearing support plates 44, 46 and the end portions of the boss portion 40, respectively, and have a thickness which is smaller than the space between the bearing support plates 44, 46 and the end portions of the boss portion 40. It is to be noted that the friction coefficients between the flange portions of the spacers 64, 66 and the bearing support plates 44, 46 and the end portions of the boss portion 40 are set to very small values.

A pair of contact members 68 and 70 is positioned in the boss portion 40 so that they can move along the axis 36, and the contact members 68 and 70 are in contact with the inner surface of the boss portion 40 at their cylindrical outer surfaces. A compression coil spring 72 is compressively interposed between the contact member 68 and 70 such that they are pressed against the bolts 56 and 58, respectively, along the axis 36.

While the spacers 64, 66 and the contact members 68, 70 may be made from a metal as the other members are, they are preferably made from a non-metal elastic material such as resign, gum or the like. In particular, the elastic coefficient of the material which configures the contact members 68, 70 is set to a value that is lower than that of the material which configures the spacers 64, 66.

The tips of the bolts 56 and 58 are substantially spherical and the outer end surfaces of the contact members 68 and 70 have substantially spherical-shaped recesses which receive the tips of the bolts 56 and 58, respectively. The radius of the spherical-shaped recesses of the contact members 68 and 70 is slightly larger than the radius of the spherical tips of the bolts 56 and 58. Accordingly, the tips of the bolts 56 and 58 are in contact with the outer end surfaces of the contact members 68 and 70 at the position on the axis 36 and the area around the position, such that the axis of the boss portion 40 is aligned with the axis 36.

Thus, the first bearing 20 supports the first arm member 12 pivotally about the axis 36 by means of the cooperation of the boss portions 48 and 50, the bolts 56 and 58, the spacers 64 and 66, the boss portion 40, the contact members 68 and 70 and the compression coil spring 72.

As the first arm member 12 pivots about the axis 36, the contact members 68 and 70 do not rotate relative to the boss portion 40 but relatively rotates about the axis 36 with the condition where the tips of the bolts 56 and 58 and the outer end surfaces of the contact members 68 and 70 are in contact with each other. Accordingly, the tips of the bolts 56 and 58 and the outer end surfaces of the contact members 68 and 70 define a first friction contact unit of the first bearing 20 on the axis 36 and at the area adjacent thereto, and a thrust load acts as a main load between the two friction contact surfaces of the first friction contact unit.

As the first arm member 12 pivots about the axis 36, the cylindrical portions of the spacers 64 and 66 do not rotate relative to the boss portion 40 but rotates relative to the boss portions 48 and 50. A load acts which energizes the boss portion 40 in the direction vertical to the axis 36 and the contact members 68 and 70 elastically deform to allow the boss portion 40 to displace relative to the boss portions 48 and 50, with the result that the inner surfaces of the cylindrical portions of the spacers 64 and 66 abut the outer surfaces of the boss portions 48 and 50. Thus, the cylindrical portions of the spacers 64, 66 and the boss portions 48, 50 define a second friction contact unit of the first bearing 20 on the axis 36 and at the area adjacent thereto, and a radial load acts as a main load between the two friction contact surfaces of the second friction contact unit.

In similar, the bolts 60, 62 and the boss portions 52, 54 are inserted in the associated ends of the boss portion 42. Spacers 74 and 76 are interposed between the boss portions 52, 54 and the boss portion 42, respectively. The spacers 74 and 76 have cylindrical portions which face the outer surfaces of the boss portions 52 and 54 at their inner surfaces and contact with the inner surfaces of the boss portion 42 at the outer surfaces, and flange portions which project from the cylindrical portions and extend circumferentially.

The inner diameter of the cylindrical portions of the spacers 74 and 76 is set to a value which is slightly larger than the outer diameter of the boss portions 52 and 54 such that a slight space is provided between the inner surfaces of the cylindrical portions of the spacers 74 and 76 and the outer surfaces of the boss portions 52 and 54. The flange portions of the spacers 74 and 76 are positioned between the bearing support plates 44, 46 and the end portions of the boss portion 42, respectively, and have a thickness which is smaller than the space between the bearing support plates 44, 46 and the end portions of the boss portion 42. It is to be noted that the friction coefficients between the flange portions of the spacers 64, 66 and the bearing support plates 44, 46 and the end portions of the boss portion 42 are set to very small values.

A pair of contact members 78 and 80 is positioned in the boss portion 42 so that they can move along the axis 38, and the contact member 78 and 80 are in contact with the inner surface of the boss portion 42 at their cylindrical outer surfaces. A compression coil spring 82 is compressively interposed between the contact member 78 and 80 such that they are pressed against the bolts 60 and 62, respectively, along the axis 38.

While the spacers 74, 76 and the contact members 78, 80 may be made from a metal as the other members are, they are preferably made from a non-metal elastic material such as resign, gum or the like. In particular, the elastic coefficient of the material which configures the contact members 78, 80 is set to a value that is lower than that of the material which configures the spacers 74, 76.

The tips of the bolts 60 and 62 are substantially spherical and the outer end surfaces of the contact members 78 and 80 have substantially spherical-shaped recesses which receive the tips of the bolts 60 and 62, respectively. The radius of the spherical-shaped recesses of the contact members 78 and 80 is slightly larger than the radius of the spherical tips of the bolts 60 and 62. Accordingly, the tips of the bolts 60 and 62 are in contact with the outer end surfaces of the contact members 78 and 80 at the position on the axis 38 and the area around the position, such that the axis of the boss portion 42 is aligned with the axis 38.

Thus, the second bearing 22 supports the second arm member 14 pivotally about the axis 38 by means of the cooperation of the boss portions 52 and 54, the bolts 60 and 62, the spacers 74 and 76, the boss portion 42, the contact members 78 and 80 and the compression coil spring 82.

As the second arm member 14 pivots about the axis 38, the contact members 78 and 80 do not rotate relative to the boss portion 42 but relatively rotates about the axis 38 with the condition where the tips of the bolts 60 and 62 and the outer end surfaces of the contact members 78 and 80 are in contact with each other. Accordingly, the tips of the bolts 60 and 62 and the outer end surfaces of the contact members 78 and 80 define a first friction contact unit of the second bearing 22 on the axis 38 and at the area adjacent thereto, and a thrust load acts as a main load between the two friction contact surfaces of the first friction contact unit.

As the second arm member 14 pivots about the axis 38, the cylindrical portions of the spacers 74 and 76 do not rotate relative to the boss portion 42 but rotates relative to the boss portions 52 and 54. A load acts which energizes the boss portion 42 in the direction vertical to the axis 38 and the contact members 78 and 80 elastically deform to allow the boss portion 42 to displace relative to the boss portions 52 and 54, with the result that the inner surfaces of the cylindrical portions of the spacers 74 and 76 abut the outer surfaces of the boss portions 52 and 54. Thus, the cylindrical portions of the spacers 74, 76 and the boss portions 52, 54 define a second friction contact unit of the second bearing 22 on the axis 38 and at the area adjacent thereto, and a radial load acts as a main load between the two friction contact surfaces of the second friction contact unit.

It is to be understood that in either of the first bearing 20 and the second bearing 22, the friction coefficient between the two friction contact surfaces of the first friction contact unit is preferably set to a value which is lower than that between the two friction contact surfaces of the second friction contact unit.

The brake pedal device 10 according to the first embodiment configured as above is assembled in the following manner.

First, the first arm member 12 and the second arm member 14 are coupled by the intermediate link 16. Then, the pair of the contact members 68, 70 and the compression coil spring 72 are disposed in the boss portion 40 of the first arm member 12, and the boss portions 48, 50 of the bearing support plates 44, 46 and the spacers 64, 66 are inserted into the end portion of the boss portion 40. Similarly, the pair of the contact members 78, 80 and the compression coil spring 82 are disposed in the boss portion 42 of the second arm member 14, and the boss portions 52, 54 of the bearing support plates 44, 46 and the spacers 74, 76 are inserted into the end portion of the boss portion 42.

Next, the first arm member 12 and the other members thus assembled are placed between the support portions 18B and 18C of the support bracket 18. The first arm member 12 and the other members are positioned with respect to the support bracket 18 so that the outer surfaces of the bearing support plates 44, 46 are in contact with the inner surfaces of the support portions 18B, 18C and the boss portions 48, 52, 50 and 54 are aligned with holes formed in the support portions 18B, 18C, respectively,

Subsequently, the bolts 56 and 58 are inserted through the holes formed in the support portions 18B, 18C and are screwed into the boss portions 48 and 50. In the same way, the bolts 60 and 62 are inserted through the holes formed in the support portions 18B, 18C and are screwed into the boss portions 52 and 54. Finally, tightening torque of each bolt is adjusted to a predetermined value to finish assembling the brake pedal device 10.

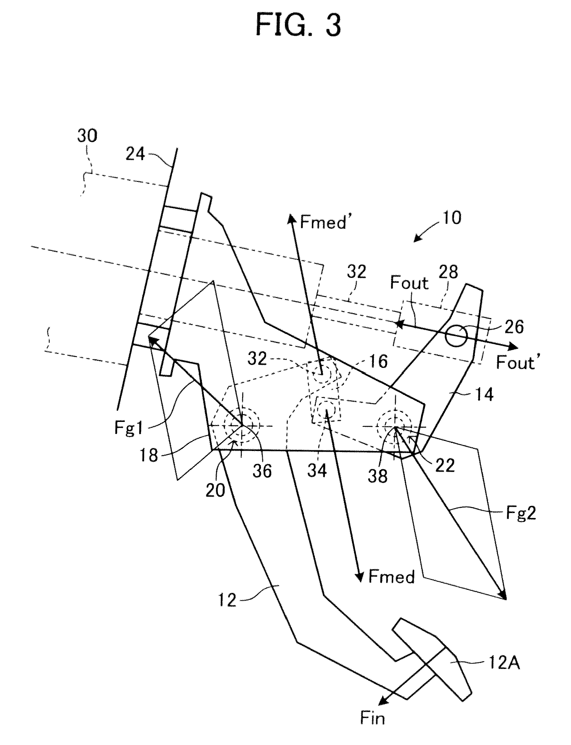

Referring now to FIGS. 3 to 5, the operation of the brake pedal device 10 according to the first embodiment is explained.

When the first arm member 12 receives a pedal effort Fin at the pedal portion 12A which function as a point of effort, the first arm member 12 serves as a lever having a fulcrum at the axis 36 of the first bearing 20 and a point of load at the axis of the pivot shaft 32. The pedal effort Fin is increased by the lever ratio of the first arm member 12 which is larger than 1 and is transmitted to the intermediate link 16.

The intermediate link 16 transmits a force Fmed to the second arm member 14 by way of the pivot shaft 34. The second arm member 14 serves as a lever having a point of effort at the axis of the pivot shaft 34, a fulcrum at the axis 38 of the second bearing 22 and a point of load at the axis of the pivot shaft 26. The force Fmed is decreased by the lever ratio of the second arm member 14 which is smaller than 1 and is transmitted to the clevis 28 as an output force Fout.

As illustrated in FIG. 3, the first arm member 12 receives a reaction force Fmed' at the axis of the pivot shaft 32 from the intermediate link 16, the reaction force being a force which is the same in magnitude as the force Fmed and acts in a direction opposite to that of the force Fmed. Accordingly, a resultant force Fg1 of the pedal effort Fin and the reaction force Fmed' acts on the first bearing 20 in a direction vertical with respect to the axis 36. The resultant force Fg1 acts as a radial load between the two friction contact surfaces in the second friction contact unit of the first bearing 20 and the radial load increases as the pedal effort Fin increases.

By contrast, the resultant force Fg1 are not directly involved in the thrust load acting in the first friction contact unit of the first bearing 20. However, the resultant force Fg1 acts as a radial load in the first friction contact unit and the elastic deformation level of the contact members 68 and 70 increases in accordance with the increase in the resultant force Fg1. As a result, the vertical stress acting between the two friction contact surfaces in the first friction contact unit slightly increases gradually and the distance between the center of the contact area of the two friction contact surfaces in the first friction contact unit and the axis 36 slightly increases gradually. Accordingly, the friction force acting between the two friction contact surfaces in the first friction contact unit slightly increases gradually in accordance with the increase in the resultant force Fg1.

As illustrated in FIG. 3, the second arm member 14 receives a reaction force Fmed at the axis of the pivot shaft 34 from the intermediate link 16 and receives a reaction force Fout' at the bearing 26 from the clevis 28, the reaction force being a force which is the same in magnitude as an output force Fount and acts in a direction opposite to that of the output force Fout. Accordingly, a resultant force Fg2 of the force Fmed and the reaction force Fout' acts on the second bearing 22 in a direction vertical with respect to the axis 38. The resultant force Fg2 acts as a radial load between the two friction contact surfaces in the second friction contact unit of the second bearing 22 and the radial load increases as the pedal effort Fin increases.

By contrast, the resultant force Fg2 are not directly involved in the thrust load acting in the first friction contact unit of the second bearing 22. However, the resultant force Fg2 acts as a radial load in the first friction contact unit and the elastic deformation level of the contact members 78 and 80 increases in accordance with the increase in the resultant force Fg2. As a result, the vertical stress acting between the two friction contact surfaces in the first friction contact unit slightly increases gradually and the distance between the center of the contact area of the two friction contact surfaces in the first friction contact unit and the axis 38 slightly increases gradually. Accordingly, the friction force acting between the two friction contact surfaces in the first friction contact unit slightly increases gradually in accordance with the increase in the resultant force Fg2.

In both of the first bearing 20 and the second bearing 22, the friction force acting in each first friction contact unit slightly increases gradually from its initial value in accordance with the increase in the pedal effort. Fin. By contrast, the friction force acting in each second friction contact unit is zero in the region where the pedal effort Fin is not larger than a certain particular value Fins. The friction force acting in each second friction contact unit increase more steeply than the friction force acting in each first friction contact unit in accordance with the increase in the pedal effort Fin in the region where the pedal effort Fin is larger than the certain particular value Fins.

In both of the first arm member 12 and the second arm member 14, the friction forces acting in the first and the second friction contact units generate resistance torques exerted on the associated arm members 12 and 14. However, as described above, the distances between the second friction contact units and the axes 36 and 38 are larger than those between the first friction contact units and the axes 36 and 38. Accordingly, even in the case where friction forces acting in the first and second friction contact units are the same in magnitude, the resistance torque Tdrag2 caused by the friction force acting in the second friction contact unit is larger than the resistance torque Tdrag1 caused by the friction force acting in the first friction contact unit.

A drive torque which tries to pivot the first arm member 12 about the axis 36 due to the pedal effort Fin is represented by Tpa and a drive torque which tries to pivot the second arm member 14 about the axis 38 due to the pedal effort Fin is represented by Tpb. The drive torques Tpa and Tpb are assumed to be the same value when the pedal effort Fin is the certain particular value Fins and the former value is referred to as a reference value Tps of the drive torque. Further, the drive torques Tpa and Tpb are given a generic name of the drive torque Tp.

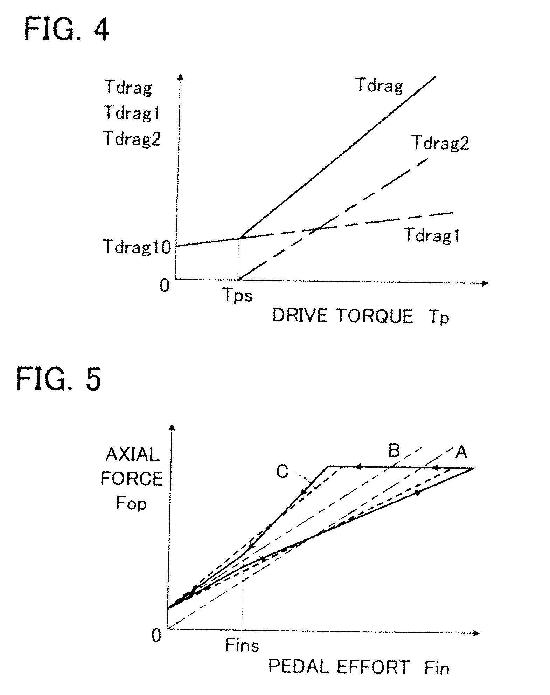

As illustrated in FIG. 4, the resistance torque Tdrag1 slightly increases gradually from its initial value Tdrag10 in accordance with the increase in the drive torque Tp. By contrast, the resistance torque Tdrag2 is zero in the region where the drive torque Tp is not larger than the reference value Tps and steeply increases in accordance with the increase in the drive torque Tp in the region where the drive torque Tp is larger than the reference value Tps.

The whole resistance torque Tdrag which is generated by means of the friction forces acting in the first and second friction contact units exerting on the associated arm members is the sum of Tdrag1 and Tdrag2, Accordingly, as illustrated in FIG.4, the resistance torque Tdrag slightly increases gradually from its initial value Tdrag10 in accordance with the increase in the drive torque Tp in the region where the drive torque Tp is not larger than the reference value Tps. By contrast, the resistance torque Tdrag steeply increases in accordance with the increase in the drive torque Tp in the region where the drive torque Tp is larger than the reference value Tps.

When the drive torque Tp decreases, the resistance torques Tdrag1 and Tdrag2 act in the direction opposite to that when the drive torque Tp increases, and depress the return pivot of the first arm member 12 and the second arm member 14. The resistance torque Tdrag1 slightly decreases gradually in accordance with the decrease in the drive torque Tp and finally assumes its initial value Tdrag10. By contrast, the resistance torque Tdrag2 steeply decreases in accordance with the decrease in the drive torque Tp in the region where the drive torque Tp is larger than the reference value Tps and assumes zero in the region where the drive torque Tp is not larger than the reference value Tps.

Accordingly, the resistance torque Tdrag steeply decreases in accordance with the decrease in the drive torque Tp in the region where the drive torque Tp is larger than the reference value Tps. By contrast, the resistance torque Tdrag slightly decreases gradually in accordance with the decrease in the drive torque Tp and finally assumes its initial value Tdrag10 in the region where the drive torque Tp is not larger than the reference value Tps.

The resistance torque acting on the arm member 12 about the axis 36 is represented by Tdraga and the resistance torque acting on the arm member 14 about the axis 38 is represented by Tdragb. The resistance torque Tdraga acts directly on the pedal portion 12A. A resistance force which corresponds to a value derived by dividing the resistance torque Tdraga by the distance between the axis 36 and the center of the pressing face of the pedal portion 12A is transmitted to the foot of a driver.

On the other hand, the resistance torque Tdragb does not directly act on the pedal portion 12A. A resistance force which corresponds to a value derived by dividing the resistance torque Tdragb by the distance between the axis 38 and the axis of the pivot shaft 34 is exerted on the arm member 12 by way of the pivot shaft 32. The resistance force is increased by the lever ratio (larger than 1) of the arm member 12 and is transmitted to the foot of the driver.

The resistance force transmitted to the foot of the driver serves to increase the pedal effort Fin which is necessary to generate a required braking force when the pedal effort Fin is increased. By contrast, the resistance force transmitted to the foot of the driver serves to decrease the pedal effort Fin which is necessary to generate a required braking force when the pedal effort Fin is decreased.

Therefore, in the first embodiment, the relationship between the pedal effort Fin and the axial force Fop of the operation rod 32 is as shown in FIG. 5 when the pedal effort Fin is increased from zero and is subsequently decreased to zero. It is to be noted that the phantom line A shows the relationship between the pedal effort Fin and the axial force Fop of the operation rod 32 with respect to the case where no substantial friction force acts in each bearing and in each pivotal support, and the phantom line B shows the relationship between the pedal effort Fin and the axial force Fop of the operation rod 32 with respect to the case where an initial friction force acts in the first friction contact unit of each bearing but no substantial friction force acts in the second friction contact unit and in each pivotal support.

In FIG. 5, the broken line C indicates an example of the relationship between the pedal effort Fin and the axial force Fop of the operation rod 32 in the conventional brake device in which the friction force acting in the bearing increases simply in accordance with the increase in the pedal effort Fin.

In the conventional brake device, if the friction coefficient of the bearing supporting the pedal arm is set to a lower value so as to ensure the moving easiness of the pedal arm at the time of starting braking, the friction force acting in the bearing does not increase well in the higher of the pedal effort Fin. As a result, the line showing the change in the axial force Fop approaches to the phantom line B in the entire region of the change in the pedal effort Fin and the hysteresis width which is made by the change of increase and subsequent decrease in the pedal effort Fin is made smaller. Accordingly, the pedal arm can not effectively be prevented from unnecessary pivotal motion by the friction force acting in the bearing in the higher region of the pedal effort Fin, which makes it difficult to stably maintain the axial force Fop.

In the conventional brake device, on the other hand, if the friction coefficient of the bearing supporting the pedal arm is set to a higher value so as to reduce the moving easiness of the pedal arm in the higher region of the pedal effort Fin, the friction force acting in the bearing becomes higher in the lower region of the effort Fin. As a result, the line showing the change in the axial force Fop moves away from the phantom line B in the entire region of the change in the pedal effort Fin and the hysteresis width which is made by the change of increase and subsequent decrease in the pedal effort Fin is made larger. Accordingly, the moving easiness of the pedal arm can not be ensured due to the excess friction force acting in the bearing in the lower region of the pedal effort Fin at the time of starting braking, which makes it difficult to ensure the easy start of braking operation.

By contrast, according to the first embodiment, as is understood form FIG. 5, the line showing the change in the axial force Fop can be made closer to the phantom line B in the region where the pedal effort Fin is not larger than the reference value Fins and can be moved away from the phantom line B in the region where the pedal effort Fin is larger than the reference value Fins.

Therefore, in the lower region of the pedal effort Fin at the time of starting braking, the resistance force can be reduced to ensure the moving easiness of the pedal arm. In the higher region of the pedal effort Fin, the hysteresis width can be made larger, which enables to effectively prevent the pedal arm from unnecessarily pivoting by the friction forces acting in the bearings to stably maintain braking force.

According to the first embodiment, in the region where the pedal effort Fin is larger than the reference value Fins, the degree in which the line showing the change in the axial force Fop is made away from the phantom line B is gradually increased in accordance with the increase in the pedal effort Fin. Accordingly, even in the case where the spring rate of the return spring is constant over the entire stroke of the pedal arm, the resistance force which the driver feels at the pedal portion 12A can be enhanced in accordance with the increase in the pedal effort Fin, which enables to ensure a good feeling of braking operation.

According to the first embodiment, the resistance force generated by the friction forces can be varied in accordance with the pedal effort Fin applied to the pedal arm independently of the return urging force of the return spring which varies in accordance with the pivotal displacement amount (stroke) of the pedal arm.

### Second Embodiment

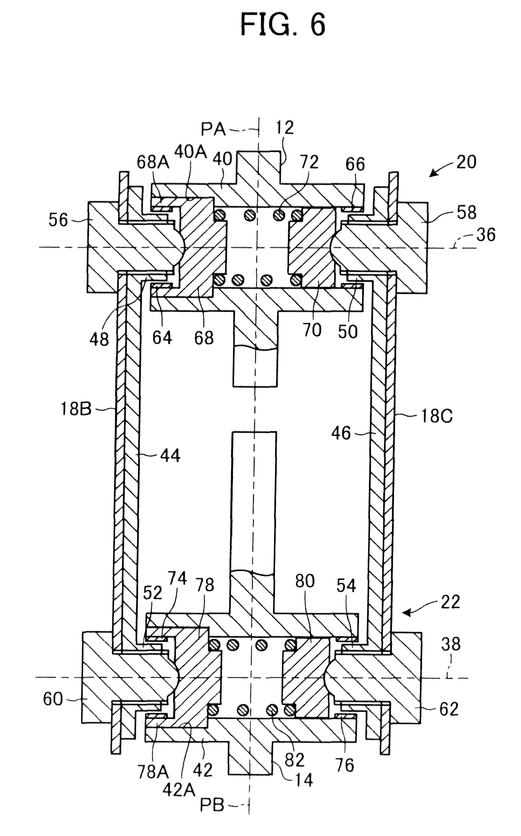

FIG. 6 is an enlarged sectional view showing the first and second bearings in a second embodiment of the pivot-arm type manipulator device according to the present invention which is applied to a brake pedal device.

In the present second embodiment, the boss portion 40 of the first arm member 12 has a portion 40A having an enlarged inner diameter on the side of the bolt 56. The contact member 68 has an outer diameter larger than the contact member 70 and is closely fitted into the portion 40A. The end of the contact member 68 abuts a shoulder which forms the end of the portion 40A. The spacer 64 has no flange portion and is cylindrical. The contact member 68 has a cylindrical portion 68A which abuts the spacer 64 and encloses it.

The contact member 68 functions similarly to the contact member 68 in the first embodiment and prevents the boss portion 40 from displacing relative to the support bracket 18 toward the bolt 56 along the axis 36. It is to be noted that the boss portion 40 is prevented by the compression coil spring 72 from displacing relative to the support bracket 18 toward the bolt 58 along the axis 36.

In similar, the boss portion 42 of the second arm member 14 has a portion 42A having an enlarged inner diameter on the side of the bolt 60. The contact member 78 has an outer diameter larger than the contact member 80 and is closely fitted into the portion 42A. The end of the contact member 78 abuts a shoulder which forms the end of the portion 42A. The spacer 74 has no flange portion and is cylindrical. The contact member 78 has a cylindrical portion 78A which abuts the spacer 74 and encloses it.

The contact member 78 functions similarly to the contact member 78 in the first embodiment and prevents the boss portion 42 from displacing relative to the support bracket 18 toward the bolt 60 along the axis 38. It is to be noted that the boss portion 42 is prevented by the compression coil spring 82 from displacing relative to the support bracket 18 toward the bolt 62 along the axis 38.

As is understood from the comparison of FIGS. 6 and 2, other structural features of the second embodiment are similar to those of the first embodiment.

Therefore, according to the second embodiment, actions and effects similar to those of the above-described first embodiment can be yielded. Additionally, it is possible to effectively suppress the wobbling of the first arm member 12 and the second arm member 14 along the axes 36 and 38, respectively and the fluctuations in the friction forces and the resistance torque generated by the friction forces due to the wobbling.

### Third Embodiment

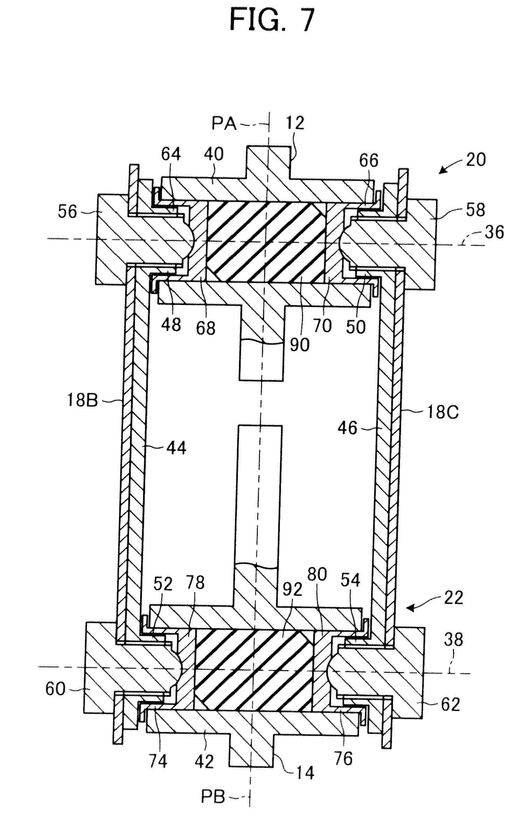

FIG. 7 is an enlarged sectional view showing the first and second bearings in a third embodiment of the pivot-arm type manipulator device according to the present invention which is applied to a brake pedal device.

In the present third embodiment, the spacers 64 and 66 are integrally formed with the contact members 68 and 70, respectively. A pushing body 90 is compressively disposed in the boss portion 40 in place of the compression coil spring 72. The pushing body 90 has the opposite ends each having a truncated cone shape and is made from an elastic material such as rubber or the like. The contact members 68 and 70 are pressed against the bolts 56 and 58, respectively along the axis 36 by the pushing body 90.

The contact members 68 and 70 function similarly to the spacers 64, 66 and the contact members 68, 70, respectively in the first embodiment and, in cooperation with the pushing body 90, suppresses unnecessary displacement of the boss portion 40 relative to the support bracket 18 along the axis 36.

In similar, the spacers 74 and 76 are integrally formed with the contact members 78 and 80, respectively. A pushing body 92 is compressively disposed in the boss portion 42 in place of the compression coil spring 82. The pushing body 92 has the opposite ends each having a truncated cone shape and is made from an elastic material such as rubber or the like. The contact members 78 and 80 are pressed against the bolts 60 and 62, respectively along the axis 38 by the pushing body 92.

The contact members 78 and 80 function similarly to the spacers 74, 76 and the contact members 78, 80, respectively in the first embodiment and, in cooperation with the pushing body 92, suppresses unnecessary displacement of the boss portion 42 relative to the support bracket 18 along the axis 38.

As is understood from the comparison of FIGS. 7 and 2, other structural features of the third embodiment are similar to those of the first embodiment.

Therefore, according to the third embodiment, actions and effects similar to those of the above-described first embodiment can be yielded. Additionally, as in the second embodiment, it is possible to effectively suppress the wobbling of the first arm member 12 and the second arm member 14 along the axes 36 and 38, respectively and the fluctuations in the friction forces and the resistance torques generated by the friction forces due to the wobbling.

In addition, according to the third embodiment, since the spacers are integrally formed with the contact members, the number of components can be reduced as compared with the first embodiment. Further, since the contact members 68, 70 and the contact members 78, 80 may be the same components, respectively, the brake pedal device can be simplified in structure and the cost can be reduced as compared with the second embodiment.

While the pushing bodies 90 and 92 are compressively disposed in the boss portions 40 and 42, respectively, they may be adhered to the inner surfaces of the boss portions 40 and 42 at their outer surfaces. In addition, the pushing bodies 90 and 92 may be fitted with metal cylinders on their peripheral, for example, and may be disposed in the boss portions 40 and 42 so that they displace relative to the boss portions 40 and 42 along the axes 36 and 38, respectively. According to the latter configuration, the thrust loads exerted on the right and left bolts can easily be equalized to each other as compared with the cases where the pushing bodies are compressively disposed or secured in the boss portions.

### Fourth Embodiment

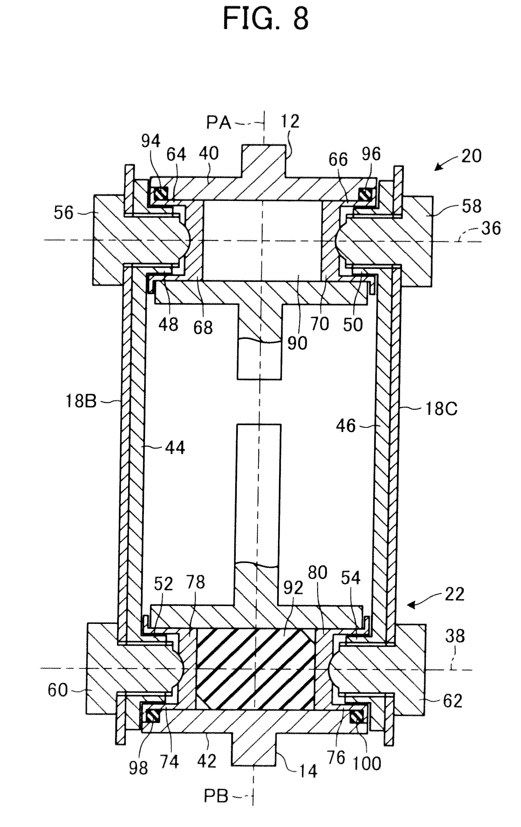

FIG. 8 is an enlarged sectional view showing the first and second bearings in a fourth embodiment of the pivot-arm type manipulator device according to the present invention which is applied to a brake pedal device.

In the present fourth embodiment, although the spacers 64 and 66 are integrally formed with the contact members 68 and 70, respectively, no pushing body 90 is disposed in the boss portion 40. O-ring seals 94 and 96 made from an elastic material such as rubber or the like are disposed in the opposite ends of the boss portion 40. The O-ring seals 94 and 96 are compressed between the flange portions of the spacers 64, 66 and the ends of the boss portion 40.

Accordingly, the contact members 68 and 70 are pressed against the bolts 56 and 58, respectively by means of the flange portions of the spacers 64 and 66 being pressed in the opposite directions by the O-ring seals 94 and 96. Notably, the friction coefficients between the O-ring seals 94, 96 and the spacers 64, 66, respectively are set to a very low value.

The contact members 68 and 70 function similarly to the spacers 64, 66 and the contact members 68, 70, respectively in the first embodiment and, in cooperation with the O-ring seals 94 and 96, suppresses the displacement of the boss portion 40 relative to the support bracket 18 along the axis 36. The O-ring seals 94 and 96 exert thrust loads between the two friction contact surfaces in the first friction contact unit of the first bearing 20, i.e. the tip ends of the bolts 56, 58 and the outer end surface of the contact members 68 and 70.

In similar, although the spacers 74 and 76 are integrally formed with the contact members 78 and 80, respectively, no pushing body 92 is disposed in the boss portion 42. O-ring seals 98 and 100 made from an elastic material such as rubber or the like are disposed in the opposite ends of the boss portion 42. The O-ring seals 98 and 100 are compressed between the flange portions of the spacers 74, 76 and the ends of the boss portion 42.

Accordingly, the contact members 78 and 80 are pressed against the bolts 60 and 62, respectively by means of the flange portions of the spacers 74 and 76 being pressed in the opposite directions by the O-ring seals 98 and 100. Notably, the friction coefficients between the O-ring seals 98, 100 and the spacers 74, 76, respectively are set to a very low value.

The contact members 78 and 80 function similarly to the spacers 74, 76 and the contact members 78, 80, respectively in the first embodiment and, in cooperation with the O-ring seals 98 and 100, suppresses the displacement of the boss portion 42 relative to the support bracket 18 along the axis 38. The O-ring seals 98 and 100 exert thrust loads between the two friction contact surfaces in the first friction contact unit of the second bearing 22, i.e. the tip ends of the bolts 60, 62 and the outer end surface of the contact members 78 and 80.

As is understood from the comparison of FIGS. 8 and 2, other structural features of the fourth embodiment are similar to those of the first embodiment.

Therefore, according to the fourth embodiment, actions and effects similar to those of the above-described first embodiment can be yielded. Additionally, as in the second and third embodiments, it is possible to suppress the wobbling of the first arm member 12 and the second arm member 14 along the axes 36 and 38, respectively and the fluctuations in the friction forces and the resistance torque generated by the friction forces due to the wobbling.

In addition, according to the fourth embodiment, as in the above-described third embodiment, since the contact members 68, 70 and the contact members 78, 80 may be the same components, respectively, the brake pedal device can be simplified in structure and the cost can be reduced as compared with the second embodiment.

It is to be noted that the means for pressing the flange portion of each spacer in the direction to move away from each other relative to the boss portion of each arm member is not limited to an O-ring, other elastic member of low friction coefficient may be used.

### Fifth Embodiment

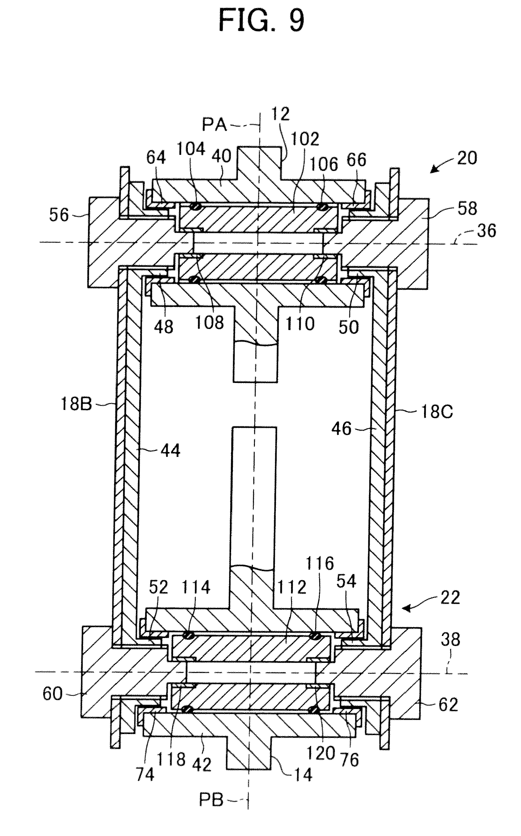

FIG. 9 is an enlarged sectional view showing the first and second bearings in a fifth embodiment of the pivot-arm type manipulator device according to the present invention which is applied to a brake pedal device.

In the present fifth embodiment, a cylindrical body 102 is disposed in the boss portion 40 of the first arm member 12 and it is fitted into the boss portion 40 by way of O-rings 104 and 106 set on the peripherals of their opposite ends. The O-rings 104 and 106 are made from an elastic material such as rubber or the like and the friction coefficients between the O-rings 104, 106 and the boss portion 40 and the cylindrical body 102 are set to a high value.

Cylindrical bushes 108 and 110 are compressively fitted into the opposite ends of the cylindrical body 102. The bushes 108 and 110 are made from an elastic material such as rubber or the like. The tip ends of the bolts 56 and 58 are column-shaped and are substantially closely fitted into the bushes 108 and 110, respectively. The column-shaped ends of the bolts 56, 58 and the bushes 108, 110 are aligned with the axis 36 as the cylindrical body 102 and the boss portion 40 and the like are.

Accordingly, the bolts 56, 58 and the bushes 108, 110, in cooperation with the cylindrical body 102 and the like, support the boss portion 40 rotationally about the axis 36. The bolts 56, 58 and the bushes 108, 110 constitute the first friction contact unit of the first bearing 20 in the vicinity of the axis 36. A radial load acts as a main load between the two friction contact surfaces of the first friction contact unit as the load acting between the two friction contact surfaces of the second friction contact unit.

In similar, a cylindrical body 112 is disposed in the boss portion 42 of the second arm member 14 and it is fitted into the boss portion 42 by way of O-rings 114 and 116 set on the peripherals of their opposite ends. The O-rings 114 and 116 are made from an elastic material such as rubber or the like and the friction coefficients between the O-rings 114, 116 and the boss portion 42 and the cylindrical body 112 are set to a high value.

Cylindrical bushes 118 and 120 are compressively fitted into the opposite ends of the cylindrical body 112. The bushes 118 and 120 are made from an elastic material such as rubber or the like. The tip ends of the bolts 60 and 62 are column-shaped and are substantially closely fitted into the bushes 118 and 120, respectively. The column-shaped ends of the bolts 60, 62 and the bushes 118, 120 are aligned with the axis 38 as the cylindrical body 112 and the boss portion 42 and the like are.

Accordingly, the bolts 60, 62 and the bushes 118, 120, in cooperation with the cylindrical body 112 and the like, support the boss portion 42 rotationally about the axis 38. The bolts 60, 62 and the bushes 118, 120 form the first friction contact unit of the second bearing 22 in the vicinity of the axis 38. A radial load acts as a main load between the two friction contact surfaces of the first friction contact unit as the load acting between the two friction contact surfaces of the second friction contact unit.

As is understood from the comparison of FIGS. 9 and 2, other structural features of the fifth embodiment are similar to those of the first embodiment.

When the first arm member 12 receives a pedal effort Fin at the pedal portion 12A, it pivots about the axis 36 and the second arm member 14 pivots about the axis 38. The boss portion 40 rotates about the axis 36 together with the cylindrical body 102 and the spacers 64, 66, while the boss portion 42 rotates about the axis 38 together with the cylindrical body 112 and the spacers 74, 76.

When the first arm member 12 receives a pedal effort Fin at the pedal portion 12A, the radial loads gradually increase in both the first bearing 20 and the second bearing 22. As the radial loads increase, the friction forces acting in the first friction contact units gradually increase from their initial values in accordance with the increase in the pedal effort Fin. Since the contact pressures between the ends of the bolts and the bushes are low, the initial values of the friction forces acting in the first friction contact units are smaller than those in the above-described first to fifth embodiments.

Also, as the radial loads increase, the O-rings 104, 106 of the first bearing 20 and the O-rings 114, 116 of the second bearing 22 are elastically deformed. As a result, in the region where the pedal effort Fin is larger than the certain particular value Fins, the boss portions of the bearing support plates and the spacers in the second friction contact units of the first bearing 20 and the second bearing 22 become in contact with each other. As the boss portions of the bearing support plates and the spacers in the second friction contact units become in contact with each other, the increasing rates decrease in the contact pressures between the ends of the bolts and the bushes in the first friction contact units in accordance with the increase in the radial loads.

Accordingly, the increasing rates in the friction forces acting in the first friction contact units in accordance with the increase in the radial loads becomes smaller in the region where the pedal effort Fin is larger than the certain particular value Fins as compared with those in the region where the pedal effort Fin is not larger than the certain particular value Fins. The friction forces acting in the second friction contact units are zero in the region where the pedal effort Fin is not larger than the certain particular value Fins. By contrast, in the region where the pedal effort Fin is larger than the certain particular value Fins, the friction forces acting in the second friction contact units due to the friction forces acting in the first friction contact units increase steeply in accordance with the increase in the pedal effort Fin as compared with the friction forces acting in the first friction contact units.

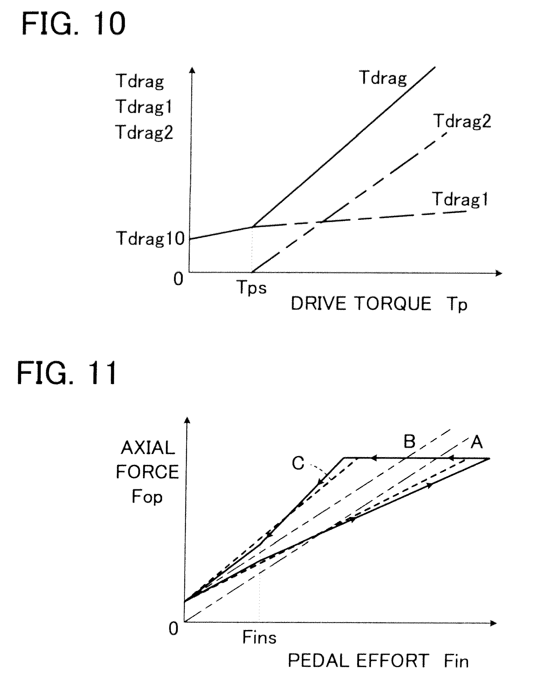

Therefore, as illustrated in FIG. 10, the resistance torque Tdrag1 generated by the friction forces acting in the first friction contact units gradually increase from their initial value Tdrag10 in accordance with the increase in the drive torque Tp. The initial values of the friction forces acting in the first friction contact units are smaller that those in the first to fourth embodiments but the radial distances between the axes 36, 38 and the first friction contact units are larger than those in the first to fourth embodiments. Accordingly, the initial value Tdrag10 is substantially the same as that in the first to fourth embodiments. The increasing rate of the resistance torque Tdrag1 associated with the increase in the drive torque Tp is lower in the region where the drive torque Tp is larger than the reference value Tps as compared with that in the region where the drive torque Tp is not larger than the reference value Tps.

By contrast, the resistance torque Tdrag2 generated by the friction forces acting in the second friction contact units is zero in the region where the drive torque Tp is not larger than the reference value Tps. The resistance torque Tdrag2 increases more steeply than the resistance torque Tdrag1 in accordance with the increase in the drive torque Tp in the region where the drive torque Tp is larger than the reference value Tps.

Therefore, in the fifth embodiment, the relationship between the pedal effort Fin and the axial force Fop of the operation rod 32 is as shown in FIG. 11 when the pedal effort Fin is increased from zero and is subsequently decreased to zero. Notably, the phantom lines A and B and the broken line C are identical with those in FIG.5.

According to the fifth embodiment, as is understood form FIG. 11, the line showing the change in the axial force Fop can be made closer to the phantom line B in the region where the pedal effort Fin is not larger than the reference value Fins and can be moved away from the phantom line B in the region where the pedal effort Fin is larger than the reference value Fins.

Therefore, in the lower region of the pedal effort Fin at the time of starting braking, the resistance force can be reduced to ensure the moving easiness of the pedal arm. In the higher region of the pedal effort Fin, the hysteresis width can be made larger, which enables to effectively prevent the pedal arm from unnecessarily pivoting by the friction forces acting in the bearings to stably maintain braking force.

According to the fifth embodiment, as in the case of the first embodiment, in the region where the pedal effort Fin is larger than the reference value Fins, the degree in which the line showing the change in the axial force Fop is made away from the phantom line B is gradually increased in accordance with the increase in the pedal effort Fin. Accordingly, the resistance force which the driver feels at the pedal portion 12A can be enhanced in accordance with the increase in the pedal effort Fin, which enables to ensure a good feeling of braking operation.

In particular, according to the fifth embodiment, by setting the radial distance between the axes 36, 38 and the first friction contact units to smaller values, the resistance torque Tdrag1 generated by the friction forces in the first contact units at the time of starting braking, i.e. the initial torque Tdrag10 can be decreased to a value which is smaller than that in the above-described first to fourth embodiments. Therefore, the moving easiness of the pedal arm at the time of starting braking can be enhanced more than in the above-described first to fourth embodiments.

### Sixth Embodiment

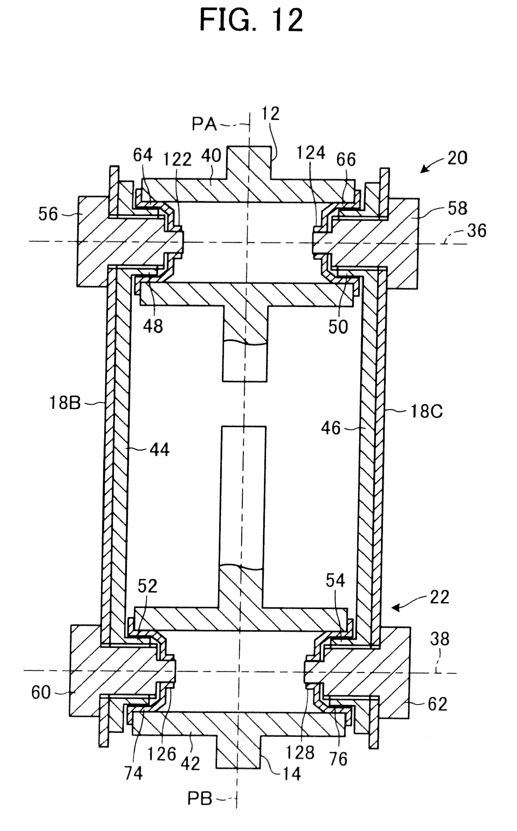

FIG. 12 is an enlarged sectional view showing the first and second bearings in a sixth embodiment of the pivot-arm type manipulator device according to the present invention which is applied to a brake pedal device.

In the present sixth embodiment, while the tip ends of the bolts 56 and 58 are column-shaped as in the above-described fifth embodiment, the cylindrical body 102, the O-rings 104, 106 and the bushes 108, 110 are not provided. Cylindrical bodies 122 and 124 are substantially closely fitted onto the tip ends of the bolts 56 and 58. The cylindrical bodies 122 and 124 are integrally formed with the spacers 64 and 66, respectively. It is to be noted that at least the portion integrally connecting each cylindrical body and spacer is made from an elastically deformable material.

In similar, while the tip ends of the bolts 60 and 62 are column-shaped as in the above-described fifth embodiment, the cylindrical body 112, the O-rings 114, 116 and the bushes 118, 120 are not provided. Cylindrical bodies 126 and 128 are substantially closely fitted onto the tip ends of the bolts 60 and 62. The cylindrical bodies 126 and 128 are integrally formed with the spacers 74 and 76, respectively. It is to be noted that at least the portion integrally connecting each cylindrical body and spacer is made from an elastically deformable material.

As is understood from the comparison of FIGS. 12 and 9, other structural features of the sixth embodiment are similar to those of the above-mentioned first to fifth embodiments.

Therefore, according to the sixth embodiment, actions and effects similar to those of the above-described fifth embodiment can be yielded. Additionally, the number of components and the cost can be reduced as compared with the fifth embodiment. Further, since the cylindrical bodies and spacers are integral with each other, the brake device 10 can be assembled more easily and efficiently as compared with the fifth embodiment.

### Seventh Embodiment

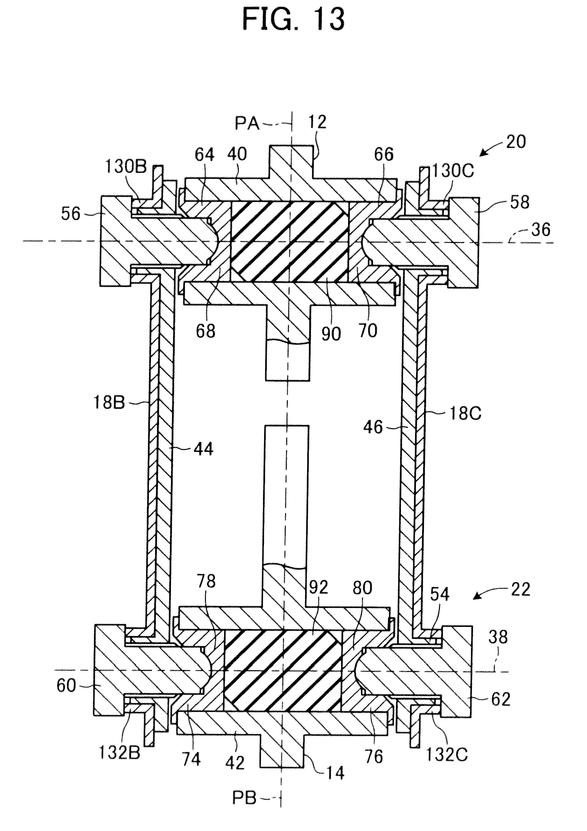

FIG. 13 is an enlarged sectional view showing the first and second bearings in a seventh embodiment of the pivot-arm type manipulator device according to the present invention which is applied to a brake pedal device.

In the present seventh embodiment, as in the third embodiment, the spacers 64 and 66 are integrally formed with the contact members 68 and 70, respectively. A pushing body 90 is compressively disposed in the boss portion 40. The pushing body 90 has the opposite ends each having a truncated cone shape and is made from an elastic material such as rubber or the like. The contact members 68 and 70 are pressed against the bolts 56 and 58, respectively along the axis 36 by the pushing body 90.

In similar, the spacers 74 and 76 are integrally formed with the contact members 78 and 80, respectively. A pushing body 92 is compressively disposed in the boss portion 42. The pushing body 92 has the opposite ends each having a truncated cone shape and is made from an elastic material such as rubber or the like. The contact members 78 and 80 are pressed against the bolts 60 and 62, respectively along the axis 38 by the pushing body 92.

The cylindrical boss portions 48 and 50 for the first bearing project in the direction away from each other along the axis 36 and the cylindrical boss portions 52 and 54 for the second bearing project in the direction away from each other along the axis 38. The support portions 18B, 18C of the support bracket 18 have cylindrical boss portions 130B, 130C for the first bearing and cylindrical boss portions 132B, 132C for the second bearing, respectively.

The boss portions 130B, 130C are fitted onto the boss portions 48, 50, respectively and the boss portions 132B, 132C are fitted onto the boss portions 52, 54, respectively. The head portions of the bolts 56, 58 are in contact with the tip end of the boss portions 130B, 130C, respectively and the head portions of the bolts 60, 62 are in contact with the tip end of the boss portions 132B, 132C, respectively.

The tip ends of the bolts 56 and 58 are column-shaped with no screw and are fitted into the cylindrical portions of the contact members 68 and 70, respectively. The tip ends of the bolts 56 and 58 have an outer diameter smaller than the inner diameter of the cylindrical portions of the contact members 68 and 70. Similarly, the tip ends of the bolts 60 and 62 are column-shaped with no screw and are fitted into the cylindrical portions of the contact members 78 and 80, respectively. The tip ends of the bolts 60 and 62 have an outer diameter smaller than the inner diameter of the cylindrical portions of the contact members 78 and 80.

Thus, in the present seventh embodiment, the second friction contact unit in the first bearing 20 is constituted by the tip ends of the bolts 56, 58 and the cylindrical portions of the contact members 68, 70. Similarly, the second friction contact unit in the second bearing 22 is constituted by the tip ends of the bolts 60, 62 and the cylindrical portions of the contact members 78, 80.

As is understood from the comparison of FIGS. 13 and 7, other structural features of the seventh embodiment are similar to those of the above-mentioned first and third embodiments.

Therefore, according to the seventh embodiment, actions and effects similar to those of the above-described first embodiment can be yielded and actions and effects similar to those of the above-described third embodiment can be yielded. Additionally, the boss portions of the support portions 18B, 18C and the boss portions of the bearing support plates 44, 46 are fitted with each other, which enables to position the bearing support plates 44, 46 with respect to the support portions 18B, 18C more easily as compared with the other embodiments.

### Eighth Embodiment

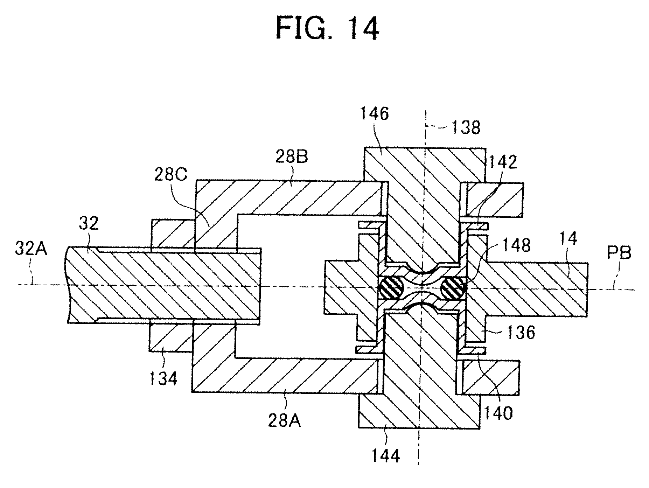

FIG. 14 is an enlarged sectional view showing a clevis coupling in a eighth embodiment of the pivot-arm type manipulator device according to the present invention which is applied to a brake pedal device.

In FIG. 14, reference numerals 14 and 28 denote the second arm member and the clevis, respectively and reference numeral 32 denotes the operation rod. The clevis 28 is U-shaped and has a pair of support portions 28A, 28B spaced apart in parallel from each other and a connection portion 28C integrally connecting the support portions. One end of the operation rod 32 is screwed into the connection portion 28C and is secured to the connection portion 28C by a lock nut 134. The axis 32A of the operation rod 32 is aligned with a center plane PB of the second arm member 14.

A boss portion 136 extending vertically with respect to the center plane PB is formed at the end of the second arm member 14. The boss portion 136 is interposed between the pair of support portions 28A and 28B while being spaced apart from them and is aligned with the axis 138. A pair of cup-shaped contact members 140 and 142 are disposed in the boss portion 136 and each have a bottom wall, a cylindrical portion connected with the bottom wall at one end, and a flange portion integrally formed with the other end of the cylindrical portion. At least the bottom walls of the contact members 140 and 142 are made from an elastically deformable material such as resin or the like.

The cylindrical portions of the contact members 140 and 142 are fitted into the boss portion 136 and are spaced apart from the support portions 28A and 28B of the clevis 28 and the end faces of the boss portion 136. Bolts 144 and 146 are screwed into the support portions 28A and 28B while being aligned with the axis 138 and their tip ends are fitted into the cylindrical portions of the contact members 140 and 142. The outer diameter of the tip ends of the bolts 144 and 146 is set to value larger than the inner diameter of the cylindrical portions of the contact members 140 and 142.

The bottom walls of the contact members 140 and 142 are located at positions equally spaced apart from the center plane PB of the second arm member 14 on both sides thereof and have sphere surface portions aligned with the axis 138 at the center area. The tip ends of the bolts 144 and 146 as well have sphere surface portions aligned with the axis 138. The radius of the sphere surface portions of the bottom walls of the contact members 140 and 142 is set a value larger than that of the sphere surface portions of the tip ends of the bolts 144 and 146.

A press ring 148 is compressively interposed between the bottom walls of the contact members 140 and 142 and the ring extends annularly around the sphere face portions while being aligned with the axis 138. The press ring 148 is made from an elastic material such as rubber or the like and presses the contact members 140 and 142 against the bolts 144 and 146. Accordingly, the sphere surface portions of the bottom walls of the contact members 140, 142 and the sphere surface portions of the tip ends of the bolts 144, 146 are in contact with each other at a position on the axis 138 and the area around it. The bolts 144 and 146 function similarly as the pivot shaft 26 in the above-described first to seventh embodiment.

Although not illustrated in the figures, when the first arm member 12 receives a pedal effort Fin at the pedal portion 12A, the second arm member 14 pivots about the axis 138 relative to the support portions 28A and 28B of the clevis 28. Accordingly, the sphere surface portions of the bottom walls of the contact members 140, 142 and the sphere surface portions of the tip ends of the bolts 144, 146 constitute the first friction contact unit on the axis 138 and the vicinity thereof, a thrust load acts as a main load between the two friction contact surfaces of the first friction contact unit.

Also, as the second arm member 14 pivots about the axis 138, the cylindrical portions of the contact members 140 and 142 do not rotate relative to the boss portion 136 but rotates relative to t the bolts 144 and 146. A load acts which energizes the boss portion 136 in the direction vertical to the axis 138, and the contact members 140 and 142 elastically deform to allow the boss portion 136 to displace relative to the bolts 144 and 146, with the result that the inner surfaces of the cylindrical portions of the contact members 140 and 142 abut the outer surfaces of the bolts 144 and 146.. Thus, the cylindrical portions of the contact members 140, 142 and the tip portions of the boss portions 144, 146 define a second friction contact unit at the position spaced away from the axis 138, and a radial load acts as a main load between the two friction contact surfaces of the second friction contact unit.

Although not illustrated in the figures, the first and second bearing in the eighth embodiment may be configured in a similar manner to any of the above-mentioned first to seventh embodiments. However, they are preferably simple radial bearings in which no high friction force is generated even when a high radial load acts.

As is apparent from the above descriptions, the first and second friction contact units in the eighth embodiment function similarly as the first and second friction contact units of the first bearing 20 and the second bearing 22 in any of the above-mentioned first to fourth embodiments. Therefore, according to the eighth embodiment, actions and effects similar to those of the above-described first embodiment can be yielded. Additionally, according to the eighth embodiment, the first and second bearing can be simplified in configuration, which enables to reduce the cost of the brake device 10 as compared with the above-described first to seventh embodiments.

### Ninth Embodiment

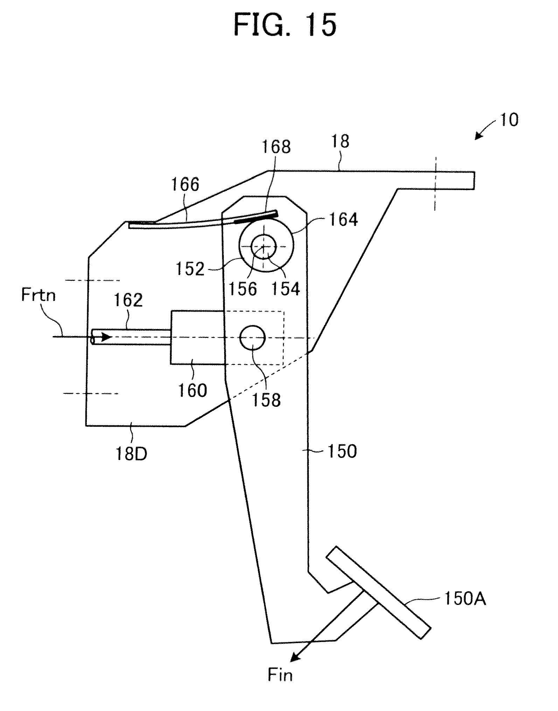

FIG. 15 is a schematic diagram showing a ninth embodiment of a pivot-arm type manipulator device according to the present invention which is applied to a brake pedal device.

In the present ninth embodiment, the brake device 10 is of general pedal type having a single pedal arm 150. The pedal arm 150 has a boss portion 152 at one end and is supported pivotally about an axis 156 by a pivot shaft 154 inserted through the boss portion 152. The opposite ends of the pivot shaft 154 are supported by a pair of support portions 18D of the support bracket 18 which are spaced apart in parallel from each other.

The pedal arm 150 has at its other end a pedal portion 150A which receives pedal effort of a driver. A clevis 160 is connected at its one end by a pivot shaft 158 to the intermediate section of the pedal arm 150 between the pivot shaft 154 and the pedal portion 150A. The other end of the clevis 160 is connected with an operation rod 162 of a master cylinder device, not shown in the figure. The friction coefficients between the boss portion 152 and the pivot shaft 154 and between the pivot shaft 158 and the clevis 160 are set to very low values by the application of a lubricant or the like.

It is to be noted that the pedal arm 150 is biased toward its initial position, i.e. the position at which the arm takes when no pedal effort Fin is exerted on the pedal portion 150A by a return bias force of a return spring, not shown, incorporated in a booster of the master cylinder device.

As illustrated, the boss portion 152 defines an eccentric cam 164 having a circular external shape decenterized in a direction perpendicular to the axis 156. A leaf spring 166 serving as an elastic bias member is secured at its one end to the support bracket 18 and a friction member 168 is secured to the other end of the leaf spring 166. The friction member 168 is in contact with the eccentric cam 164 and is pressed against the eccentric cam 164 by the bias force of the leaf spring 166. Accordingly, the friction member 168 and the eccentric cam 164 cooperate with each other to constitute a friction contact unit P and generate a friction force by means of the eccentric cam 164 rotating relatively to the friction member 168.

The radial distance between the friction contact unit P and the axis 156 is represented by L. The profile of the eccentric cam 164 is set so that the distance L assumes the smallest value when the pedal arm 150 is at its initial position, i.e. the pedal effort exerted against the pedal portion 150A is zero. Accordingly, the distance L increases as the pedal effort Fin exerted against the pedal portion 150A increases and the pedal arm 150 proceeds to pivot about the axis 156.

The load by which the leaf spring 166 biases the friction member 168 against the eccentric cam 164 is proportional to the elastic deformation amount of the leaf spring 166 caused by the eccentric cam 164. The elastic deformation amount of the leaf spring 166 is proportional to the distance L. Accordingly, the pressing load exerted between the eccentric cam 164 and the friction member 168 as well increases as the pedal arm 150 proceeds to pivot about the axis 156.

When the pedal arm 150 is depressed and is pivoted about the axis 156, a resistance torque Tdrag acts against the pedal arm 150 which corresponds to a product of the distance L and the friction force generated by the friction contact of the friction member 168 and the eccentric cam 164. Accordingly, the resistance torque Tdrag assumes the smallest value when the pedal arm 150 is at its initial position and increases in proportion to the square of the distance L as the pedal arm 150 proceeds to pivot about the axis 156.

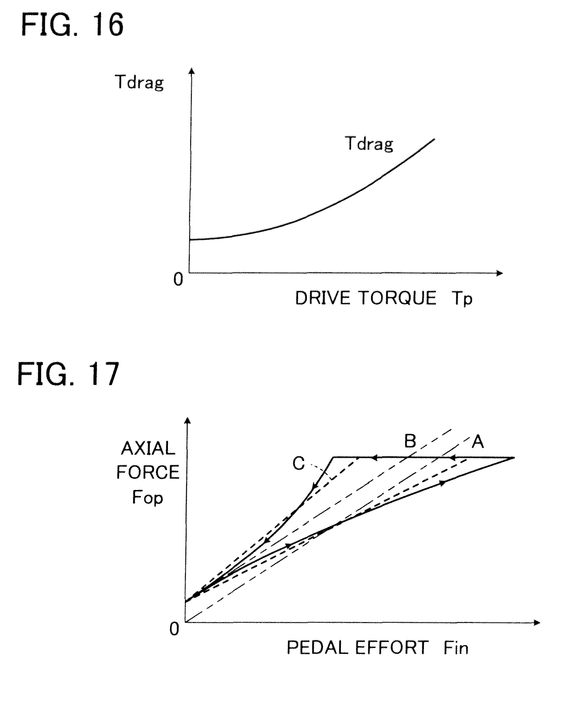

Thus, in the ninth embodiment, the relationship between the pedal effort Fin and the resistance torque Tdrag is as shown in FIG. 16 and the relationship between the pedal effort. Fin and the axial force Fop of the operation rod 162 is as shown in FIG. 17.

Therefore, according to the ninth embodiment, even in the cases where the pivot-arm type manipulator device is the brake device 10 is of general pedal type, as in the above-described first to eighth embodiments, the resistance force generated by the friction forces can be varied in accordance with the pedal effort Fin applied to the pedal arm independently of the return urging force of the return spring which varies in accordance with the pivotal displacement amount of the pedal arm.

According to the ninth embodiment, as in the above-described first to eighth embodiments, in the lower region of the pedal effort Fin at the time of starting braking, the resistance force can be reduced to ensure the moving easiness of the pedal arm. In the higher region of the pedal effort Fin, the hysteresis width can be made larger, which enables to effectively prevent the pedal arm from unnecessarily pivoting by the friction forces acting in the bearings to stably maintain braking force.

In particular, according to the ninth embodiment, a desired characteristic can easily be achieved by designing the profile of the eccentric cam 164, and the brake pedal device can be simplified in structure and the cost can be reduced as compared with the above-described first to eighth embodiments.

A desired characteristic can be achieved more easily and more reliably as compared, for example, with the device in which the boss portion 152 is not provided with the eccentric cam 164, the friction member 168 is in contact with the cylindrical boss portion 152 which is aligned with the axis 156, and the friction coefficient between the boss portion 152 and the friction member 168 is set to increase as the pivotal displacement of the pedal arm 150 increases.

### Tenth Embodiment

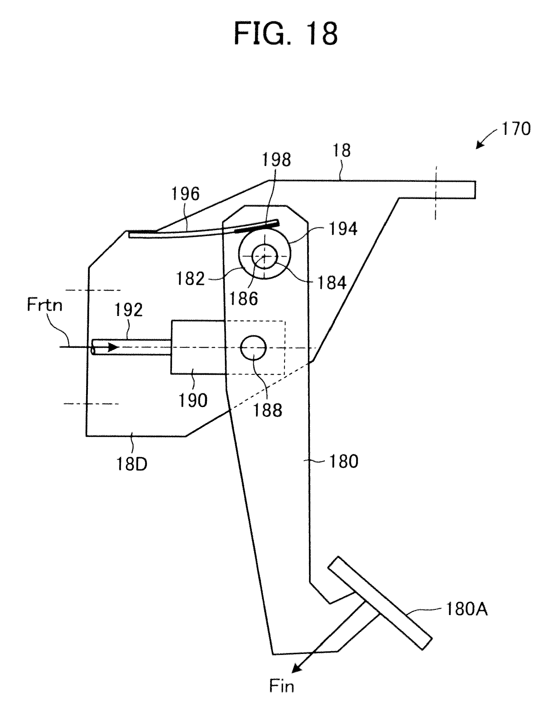

FIG. 18 is a schematic diagram showing a tenth embodiment of a pivot-arm type manipulator device according to the present invention which is applied to a clutch pedal device.

In FIG. 18, reference numeral 170 denotes the entire clutch pedal device and the clutch pedal device 170 is constituted in a manner similar to that in the ninth embodiment. That is, the clutch pedal device 170 is of general pedal type having a single pedal arm 180. The pedal arm 180 has a boss portion 182 at one end and is supported pivotally about an axis 186 by a pivot shaft 184 inserted through the boss portion 182. The opposite ends of the pivot shaft 184 are supported by a pair of support portions 18D of the support bracket 18 which are spaced apart in parallel from each other.

The pedal arm 180 has at its other end a pedal portion 180A which receives pedal effort of a driver. A clevis 190 is connected at its one end by a pivot shaft 188 to the intermediate section of the pedal arm 180 between the pivot shaft 184 and the pedal portion 180A. The other end of the clevis 190 is connected with a push rod 192 of a clutch device, not shown in the figure. The friction coefficients between the boss portion 182 and the pivot shaft 184 and between the pivot shaft 188 and the clevis 190 are set to very low values by the application of a lubricant or the like.

It is to be noted that the pedal arm 180 is biased toward its initial position, i.e. the position at which the arm takes when no pedal effort Fin is exerted on the pedal portion 180A by a return bias force of a return spring, not shown, incorporated in the clutch device.

As illustrated, the boss portion 182 defines an eccentric cam 194 having a circular external shape decenterized in a direction perpendicular to the axis 186. A leaf spring 196 serving as an elastic bias member is secured at its one end to the support bracket 18 and a friction member 198 is secured to the other end of the leaf spring 196. The friction member 198 is in contact with the eccentric cam 194 and is pressed against the eccentric cam 194 by the bias force of the leaf spring 196. Accordingly, the friction member 198 and the eccentric cam 194 cooperate with each other to constitute a friction contact unit P and generate a friction force by means of the eccentric cam 194 rotating relatively to the friction member 198.

The radial distance between the friction contact unit P and the axis 186 is represented by L. The profile of the eccentric cam 194 is set so that the distance L assumes the largest value when the pedal arm 180 is at its initial position, i.e. the pedal effort exerted against the pedal portion 180A is zero. Accordingly, the distance L decreases as the pedal effort Fin exerted against the pedal portion 180A increases and the pedal arm 180 proceeds to pivot about the axis 186.

The load by which the leaf spring 196 biases the friction member 198 against the eccentric cam 194 is proportional to the elastic deformation amount of the leaf spring 196 caused by the eccentric cam 194. The elastic deformation amount of the leaf spring 196 is proportional to the distance L. Accordingly, the pressing load exerted between the eccentric cam 194 and the friction member 198 as well decreases as the pedal arm 180 proceeds to pivot about the axis 186.

When the pedal arm 180 is depressed and is pivoted about the axis 186, a resistance torque Tdrag acts against the pedal arm 180 which corresponds to a product of the distance L and the friction force generated by the friction contact of the friction member 198 and the eccentric cam 194. Accordingly, the resistance torque Tdrag assumes the smallest value when the pedal arm 180 is at its initial position and decreases in proportion to the square of the distance L as the pedal arm 180 proceeds to pivot about the axis 186.

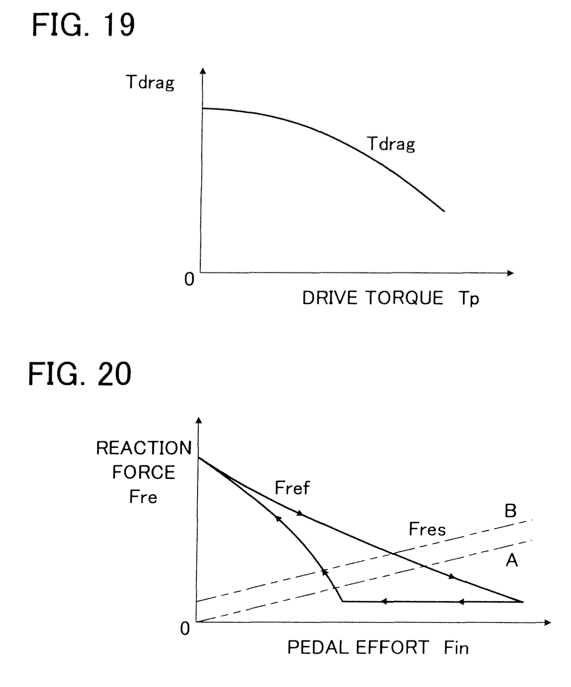

Thus, in the tenth embodiment, the relationship between the pedal effort. Fin and the resistance torque Tdrag is as shown in FIG. 19 and the relationship between the pedal effort Fin and the resistance force Fref generated by the friction forces is as shown in FIG. 20. Notably, the reaction force which a driver feels at the pedal portion 180A is a sum of the resistance force Fref generated by the friction forces and the reaction force Fres of the return spring shown by symbol B in FIG. 20.

Therefore, according to the tenth embodiment, even in the cases where the pivot-arm type manipulator device is the clutch pedal device is of general pedal type, as in the above-described first to ninth embodiments, the resistance force generated by the friction forces can be varied in accordance with the pedal effort applied to the pedal arm independently of the return urging force of the return spring which varies in accordance with the pivotal displacement amount of the pedal arm.

According to the tenth embodiment, contrary to the above-described first to ninth embodiments, in the lower region of the pedal effort Fin at the time of starting clutching operation, the resistance force generated by the friction forces can be increased, which enables to effectively prevent the pedal arm from unnecessarily pivoting. In the higher region of the pedal effort Fin, the resistance force generated by the friction forces can be reduced, which enables to enhance the moving easiness of the pedal arm, thereby ensuring easy clutching operation.

In particular, according to the tenth embodiment, as in the ninth embodiment, a desired characteristic can easily be achieved by designing the profile of the eccentric cam 194.

A desired characteristic can be achieved more easily and more reliably as compared, for example, with the device in which the boss portion 182 is not provided with the eccentric cam 194, the friction member 198 is in contact with the cylindrical boss portion 182 which is aligned with the axis 186, and the friction coefficient between the boss portion 182 and the friction member 198 is set to decrease as the pivotal displacement of the pedal arm 180 increases.

It is to be noted that in the ninth and tenth embodiments, the friction coefficient between the boss portion 182 and the friction member 198 may not be constant over the entire stroke range. For example, the surface roughness of the outer surface of the eccentric cam 164 or 194 may be set so that, for example, the friction coefficient between the boss portion 182 and the friction member 198 varies according to the pivotal displacement of the pedal arm 180.

While the present invention has been described with reference to the above embodiments, it will be apparent to those skilled in the art that the present invention is not limited thereto, but may be embodied in various other forms without departing from the scope of the invention.

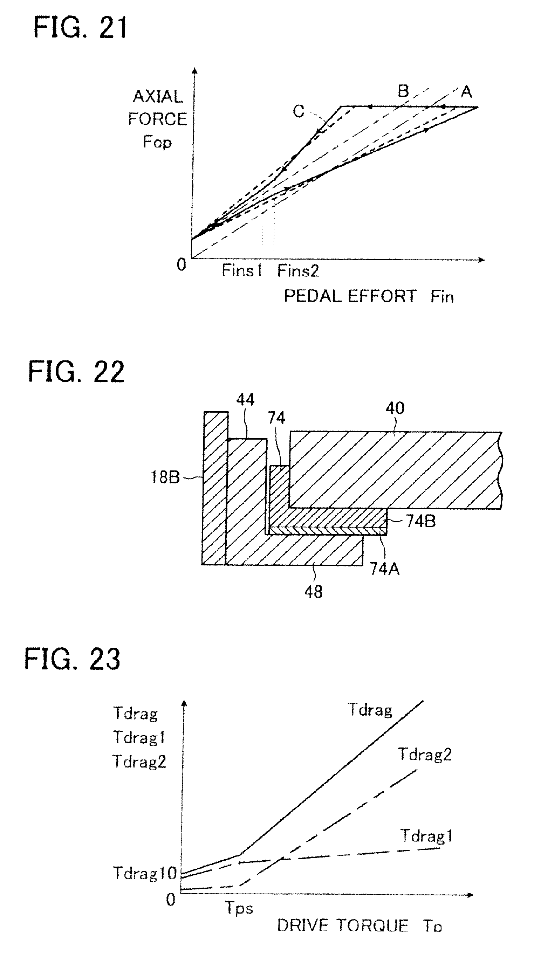

For example, in the above-described first to eighth embodiments, the values of "a certain particular value Fins" with respect to pedal effort are equal for the first bearing 20 and the second bearing 22. The values of "a certain particular value Fins" for the two bearings are set to Fins1 and Fins2 which are different from each other. In that case, the relationship between the pedal effort. Fin applied to the pedal portion and the axial force Fop of the operation rod is as shown in FIG. 21.

While in the first to eighth embodiments, when the pedal effort Fin is not larger than the certain particular value Fins, the two members constituting the second friction contact unit are spaced apart from each other in a radial direction, at least in one of the first bearing 20 and the second bearing 22, they my be in contact with each other as well when the pedal effort Fin is not larger than the certain particular value Fins.

In such a case, as illustrated in FIG. 22 as a modification of the first embodiment, a spacer such as the spacer 74 which is the one of the members constituting the second friction contact unit may be configured to have a low rigidity layer (74A) and a high rigidity layer (74B). The radial rigidity of the low rigidity layer is set to a value which is lower than that of the first friction contact unit and the radial rigidity of the high rigidity layer is set to a value which is higher than that of the first friction contact unit.

According to this configuration, when a radial load acts in a bearing, the low rigidity layer is first elastically deformed prior to the first friction contact unit. As the radial load continues to increase, the increasing rate of the elastic deformation amount in the low rigidity layer decreases, whereas the increasing rate of the elastic deformation amount in the high rigidity layer increases. Thus, the entire rigidity of the spacer gradually increases in accordance with the increase in the radial load.

Accordingly, if the rate of the radial load transmitted to the second friction contact unit to the radial load transmitted to the first friction contact unit is referred to sharing rate of the radial load Rr, when the pedal effort Fin is smaller, the sharing rate of the radial load Rr is not larger than 1, whereas when the pedal effort Fin is larger, the sharing rate is larger than 1.

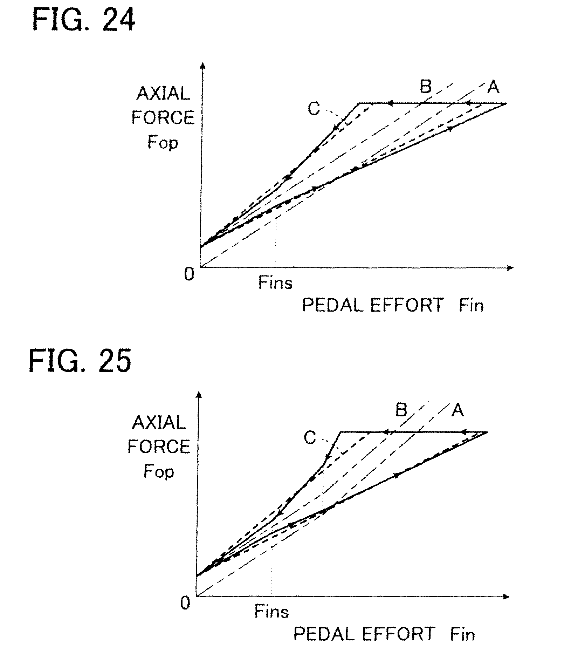

Therefore, the relationship between the drive torque Tp applied to the arm member and the resistance torque Tdrag exerted against the arm member is as shown in FIG. 23, and the relationship between the pedal effort Fin applied to the pedal portion and the axial force Fop of the operation rod is as shown in FIG. 24.

In the above-described embodiments, the spring rate of the return spring is constant which biases the arm member toward its initial position, i.e. the position which the arm member takes when the pedal effort Fin is zero. However, the pivot-arm type manipulator device according to the present invention may be applied to a manipulator device in which a return spring has a progressive spring rate so that when the pivot displacement of the arm member is larger, the spring rate assumes a higher value as compared with the case where the pivot displacement is smaller.

For example, the spring rate of the return spring varies in two stages in accordance with the increase in the pivot displacement of the arm member, the relationship between the pedal effort Fin applied to the pedal portion and the axial force Fop of the operation rod is as shown in FIG. 25.

In the first to embodiments, the brake pedal device 10 is a link type pedal having a first arm member 12 serving as a pedal arm, a second arm 14 serving as an auxiliary arm, and an intermediate link 16. However, the pivot-arm type manipulator device according to the present invention may be applied to a manipulator device of a general pedal type in which neither auxiliary arm nor intermediate link is provided and a pedal arm is supported by a single bearing. In that case, the configuration of the first bearing 20 or the second bearing 22 in the above-described embodiments is applied to the bearing which pivotally supports the pedal arm.

In the first to fourth embodiments, the bolts and the contact members which constitute the second friction contact unit are in contact with each other at sphere portions. However, so long as the two members constituting the second friction contact unit support the arm member in a rotatable manner about the axis while exerting thrust load against each other, any shape other than spherical shape may be adopted. For example, the mutually contacting portions of the two members may have the relationship of a sphere surface and a truncated cone surface or the relationship of truncated cone surfaces.

Although in the fifth and sixth embodiments, as in the first embodiment, the pair of bolts in the first bearing 20 and the second bearing 22 are independent from each other, the bolts 56 , 58 and the bolts 60, 62 may be integrally coupled by means of, for example, screw engaging of the tip ends.

In the ninth and tenth embodiments, the cam surfaces of the eccentric cams 164 and 194 are circler decenterized in a perpendicular direction with respect to the axis 156 and 186. However, so long as the radial distance between the axis and the friction contact unit p can be varied by the rotation of the eccentric cam, the cam surface may be of any shape such as ellipse, heart shape or the like.

In the ninth and tenth embodiments, the elastic urging member which presses the friction members 168 and 198 against the cam surfaces of the eccentric cam 164 and 194, respectively are leaf springs 166 and 196. However, the elastic urging member may be any urging member made from elastic material such as a coil spring, an elastomeric body, and a torsion bar, so long as it can vary elastic deformation amount and elastic pressing force in accordance with the change in the radial distance between the axis and the friction contact unit P.

## Claims

1. A pivot-arm type manipulator device having an arm member that pivots about an axis by being manipulated, wherein
said manipulator device has a friction contact unit that generates friction force as said arm member pivots; and
the resistance torque that is applied to said arm member about said axis by said friction force assumes different values in a first region of a small degree of manipulation vis-à-vis said arm member and in a second region of the degree of manipulation vis-à-vis said arm member that is greater than the degree of manipulation of the first region.

2. A pivot-arm type manipulator device according to claim 1, wherein
said resistance torque in said first region is smaller than that in said second region; and
the ratio of the variation of said resistance torque relative to the variation of the degree of manipulation vis-à-vis said arm member is larger in said second region than in said first region.

3. A pivot-arm type manipulator device according to clam 1, wherein
said resistance torque in said first region is larger than that in said second region; and
the ratio of the variation of said resistance torque relative to the variation of the degree of manipulation vis-à-vis arm member is larger in said second region than in said first region.

4. A pivot-arm type manipulator device according to claim 1 or 2, wherein at least one of the following differs between said first and second regions: the friction coefficient between two members that configure said friction contact unit, the pressing load that acts between the two members that configure said friction contact unit, or the distance in the radial direction between said axis and said friction contact unit.

5. A pivot-arm type manipulator device according to claim 2, wherein
said friction contact unit includes at least two friction contact units including a first and a second friction contact unit; and
the distance in the radial direction between said axis and said second friction contact unit is larger than the distance in the radial direction between said axis and said first friction contact unit.

6. A pivot-arm type manipulator device according to claim 5, wherein the two members that configure said second friction contact unit are spaced apart from each other when the degree of manipulation vis-à-vis said arm member is in said first region and are in contact with each other when the degree of manipulation vis-à-vis said arm member is in said second region.

7. A pivot-arm type manipulator device according to claim 5, wherein
the two members that configure said second friction contact unit are in contact with each other; and
the increasing rate of the pressing load acting between said two members associated with the increase in the degree of manipulation vis-à-vis said arm member when the degree of manipulation vis-à-vis said arm member is in said second region is larger than that when the degree of manipulation vis-à-vis said arm member is in said first region.

8. A pivot-arm type manipulator device according to claim 6 or 7, wherein
said pivot-arm type manipulator device has a manipulation force transmitting unit which transmits a part of the manipulation force received by said arm member as a radial load to said second friction contact unit; and
the two members that configure said second friction contact unit are pressed against each other by said radial load.

9. A pivot-arm type manipulator device according to claim 8, wherein
a main load acting between the two members that configure said first friction contact unit is a thrust load acting along said axis; and
a main load acting between the two members that configure said second friction contact unit is a radial load.

10. A pivot-arm type manipulator device according to claim 6 or 7, wherein
said pivot-arm type manipulator device has manipulation force transmitting units which transmit a part of the manipulation force received by said arm member as radial loads to said first and second friction contact units; and
with the rate of the radial load transmitted to said second friction contact unit relative to the radial load transmitted to said first friction contact unit being referred to a sharing rate of the radial load, the sharing rate of the radial load when the degree of manipulation vis-à-vis said arm member is in said second region is larger than that when the degree of manipulation vis-à-vis said arm member is in said first region.

11. A pivot-arm type manipulator device according to claim 10, wherein a main load acting between the two members that configure said first friction contact unit and a main load acting between the two members that configure said second friction contact unit are radial loads.

12. A pivot-arm type manipulator device according to claim 2, wherein
said friction contact unit is configured by an eccentric cam which pivots about said axis as said arm member pivots and a friction member which frictionally engages with the cam surface of said eccentric cam while being pressed against the cam surface; and
the distance between said axis and said cam surface in said friction contact unit is larger when the degree of manipulation vis-à-vis said arm member is in said second region than that when the degree of manipulation vis-à-vis said arm member is in said first region.

13. A pivot-arm type manipulator device according to claim 12, wherein said friction member is pressed against the cam surface of said eccentric cam by elastic urging force of an elastic urging member.

14. A pivot-arm type manipulator device according to any one of claims 2 to 13, wherein said pivot-arm type manipulator device is a brake pedal device for adjusting braking force.

15. A pivot-arm type manipulator device according to claim 3, wherein
said friction contact unit is configured by an eccentric cam which pivots about said axis as said arm member pivots and a friction member which frictionally engages with the cam surface of said eccentric cam while being pressed against the cam surface; and
the distance between said axis and said cam surface in said friction contact unit is larger when the degree of manipulation vis-à-vis said arm member is in said first region than when the degree of manipulation vis-à-vis said arm member is in said second region.

16. A pivot-arm type manipulator device according to claim 15, wherein said friction member is pressed against the cam surface of said eccentric cam by elastic urging force of an elastic urging member.

17. A pivot-arm type manipulator device according to claim 3, 15 or 16, wherein said pivot-arm type manipulator device is a clutch pedal device for operating a clutch.

18. A pivot-arm type manipulator device according to any one of claims 1 to 17, wherein said pivot-arm type manipulator device has a displacement suppressing unit which suppresses the displacement of said arm member in the direction along said axis.

19. A pivot-arm type manipulator device having an arm member that is urged toward its initial position by return urging force and pivots about an axis by being manipulated, comprising:
a friction contact unit that generates friction force as said arm member pivots; and
a resistance torque varying mechanism which varies the resistance torque that is applied to said arm member about said axis by said friction force in accordance with the degree of manipulation vis-à-vis said arm member independently of the reaction torque which is applied to said arm member about said axis by said return urging force.

20. A pivot-arm type manipulator device according to claim 19, wherein said resistance torque varying mechanism varies at least one of the friction coefficient between two members that configure said friction contact unit, the pressing load that acts between the two members that configure said friction contact unit, or the distance in the radial direction between said axis and said friction contact unit in accordance with the degree of manipulation vis-à-vis said arm member.
